(19) Europäisches Patentamt
European Patent Office
Office européen des brevets

(11) EP 1 340 807 B1

(12) # EUROPÄISCHE PATENTSCHRIFT

(45) Veröffentlichungstag und Bekanntmachung des Hinweises auf die Patenterteilung:
**09.05.2007 Patentblatt 2007/19**

(51) Int Cl.:
***C11D 17/00*** *(2006.01)* ***C11D 3/37*** *(2006.01)*
***C09J 171/02*** *(2006.01)*

(21) Anmeldenummer: **03003872.3**

(22) Anmeldetag: **24.02.2003**

(54) **Formkörper mit nachträglicher Tensiddosierung**

Shaped bodies containing post-added surfactants

Corps moulés contenant des tensio-actifs ajoutés postérieurement

(84) Benannte Vertragsstaaten:
**AT BE BG CH CY CZ DE DK EE ES FI FR GB GR HU IE IT LI LU MC NL PT SE SI SK TR**

(30) Priorität: **01.03.2002 DE 10209156**

(43) Veröffentlichungstag der Anmeldung:
**03.09.2003 Patentblatt 2003/36**

(73) Patentinhaber: **Henkel Kommanditgesellschaft auf Aktien**
**40589 Düsseldorf (DE)**

(72) Erfinder:
- **Holderbaum, Thomas, Dr.**
  **40789 Monheim (DE)**
- **Pegelow, Ulrich, Dr.**
  **40597 Düsseldorf (DE)**
- **Larson, Bernd, Dr.**
  **41812 Erkelenz (DE)**
- **Volk, Harald, Dr.**
  **LU-3939 Mondercange (LU)**

(56) Entgegenhaltungen:
**EP-A- 1 081 218**
**EP-A- 1 104 801**
**WO-A-01/60965**
**DE-A- 19 851 426**
**US-A- 3 753 944**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 340 807 B1

## Beschreibung

Die vorliegende Erfindung liegt auf dem Gebiet der Wasch- und Reinigungsmittelformkörper, wie sie zur Dosierung wasch- und reinigungsaktiver Substanzen in Textil- oder Geschirreinigungsmitteln verwendet werden. Gegenstand der Erfindung ist ein Verfahren zur Herstellung tensidhaltiger ein- oder mehrphasiger Wasch- und Reinigungsmittelformkörper.

Wasch- und Reinigungsmittelformkörper sind im Stand der Technik breit beschrieben und erfreuen sich beim Verbraucher wegen der einfachen Dosierung einer hohen Akzeptanz. Wasch- und Reinigungsmittelformkörper haben gegenüber pulverförmigen Mitteln eine Reihe von Vorteilen: Sie sind einfacher zu dosieren und zu handhaben und haben auf Grund ihrer kompakten Struktur Vorteile bei der Lagerung und beim Transport. Auch in der Patentliteratur sind Wasch- und Reinigungsmittelformkörper folglich umfassend beschrieben. So offenbart die WO-A-01/60965 ein Verfahren zur Herstellung mehrphasiger Wasch- und Reinigungsmittel. Zu den wichtigsten Inhaltsstoffen dieser Formkörper gehören neben den Buildern vor allem die Tenside, wobei innerhalb dieser Substanzklasse zwischen den anionischen, nichtionischen, kationischen und amphoteren Tensiden unterschieden werden kann. Während die Tenside auf Grund ihrer grenzflächenaktiven Eigenschaften einen wichtigen Beitrag zur Reinigungsleistung von Wasch- und Reinigungsmitteln leisten und ihr Einsatz in diesen Mitteln daher vielfach unerläßlich ist, ergeben sich bei der Verarbeitung, insbesondere der formgebenden Verarbeitung von tensidhaltigen Wasch- und Reinigungsmitteln häufig Probleme, welche hauptsächlich auf deren Tensidgehalt zurückzuführen sind und sich vielfach mit steigendem Tensidgehalt verstärken. Beispielhaft seien an dieser Stelle die mit steigendem Tensidgehalt zunehmenden Anbackungen an Tablettierstempeln bei der Tablettierung und die mit steigendem Tensidgehalt zunehmende Adhäsionsneigung von Extrudaten genannt. Zusätzlich hierzu weisen die formgebend verarbeiteten Pulver oder Granulate eine mit zunehmendem Tensidgehalt verringerte Rieselfähigkeit auf, wodurch sich bereits im Vorfeld der formgebenden Verarbeitung produktionstechnische Schwierigkeiten ergeben. Diese Schwierigkeiten führen zu einer erhöhten Fehlerquote bei der Herstellung dieser Formkörper, verlängern damit die Totzeiten für Maschinen und Personal, und sind häufig nur nach zahlreichen und langwierigen Umstellungen der Verfahrensführung zu beseitigen. Auch ergeben sich diese Mängel bereits bei kleineren Änderungen der Rezepturen tensidhaltigen Mittel stets aufs Neue. Für den Hersteller von tensidhaltigen Wasch- und Reinigungsmitteln ergeben sich hieraus häufige kostspielige Verfahrensumstellungen. Die Aufgabe der vorliegenden Anmeldung ist es daher, ein Verfahren für die Herstellung von Wasch- und Reinigungsmitteln bereitzustellen, welches die vorgenannten Probleme nicht aufweist, insbesondere die flexible Dosierung von Tensiden zu Wasch- und Reinigungsmitteln, welche formgebend verarbeitet werden, ermöglicht, mit dem Ziel, die Entwicklungs- und Produktionskosten derartiger Mittel zu senken und zügige Rezepturänderungen zu ermöglichen. Ein solches Verfahren sollte daher unabhängig von der Grundrezeptur des Wasch- und Reinigungsmittels einsetzbar sein.

Überraschenderweise wurde nun gefunden, daß diese Aufgaben durch die nachträgliche Dosierung von Tensiden zu formgebend verarbeiteten Wasch- und/oder Reinigungsmittelvorgemischen gelöst werden können.

Ein erster Gegenstand der vorliegenden Anmeldung ist daher ein Verfahren zur Herstellung von ein- oder mehrphasigen Wasch- und/oder Reinigungsmittelformkörpern, enthaltend Tensid(e), Gerüststoff(e), sowie optional weitere übliche Bestandteile von Wasch- und Reinigungsmitteln, dadurch gekennzeichnet, daß ein Wasch- und/oder Reinigungsmittelvorgemisch durch ein formgebendes Verfahren in einen Formkörper überführt und anschließend mit einem tensidhaltigen Atkivsubstanzgemisch beaufschlagt wird.

Das erfindungsgemäße Verfahren hat den Vorteil einer erhöhten Flexibilität in der Herstellung von tensidhaltigen Wasch- und Reinigungsmittelformkörpern. Ausgehend von einer Grundrezeptur für ein Wasch- und/oder Reinigungsmittelvorgemisch und den daraus hergestellten Formkörpem lassen sich durch nachträgliches Aufbringen von Tensiden oder tensidhaltigen Atkivsubstanzgemischenemischen eine Vielzahl verschiedener Produkte herstellen. Durch Variation der nachträglich aufgebrachten tensidhaltigen Aktivsubstanzgemische lassen sich auf einfache und kostengünstige Weise Rezepturänderungen realisieren. Weiterhin ist das erfindungsgemäße Verfahren geeignet, die in den Wasch- und Reinigungsmittelformkörpern einsetzbare Tensidgesamtmenge zu erhöhen, da es durch die nachträgliche Beaufschlagung der Formkörper mit tensidhaltigen Aktivstoffgemischen gelingt, die eingangs angeführten produktionstechnischen Probleme bei der Herstellung tensidhaltiger Formkörper zu vermeiden. Hohe Tensidgehalte der nachträglich aufgebrachten tensidhaltigen Aktivsubstanzgemische haben dabei den Vorteil, das Gesamtvolumen des für die nachträgliche Dosierung eingesetzten Aktivsubstanzgemisches zu reduzieren und die Verfahrensführung zu vereinfachen. Im Rahmen der vorliegenden Erfindung hat es sich daher als vorteilhaft erwiesen, daß das tensidhaltige Aktivsubstanzgemisch einen Tensidgehalt oberhalb 20 Gew.-%, vorzugsweise oberhalb 35 Gew.-%, insbesondere oberhalb 55 Gew.-%, besonders bevorzugt oberhalb 75 Gew.-% und ganz besonders bevorzugt oberhalb 90 Gew.-% aufweist. Zur Minimierung des Volumens eines nachträglich aufgetragenen tensidhaltigen Aktivsubstanzgemisches sind insbesondere solche Verfahren bevorzugt, bei denen das tensidhaltige Aktivsubstanzgemisch ausschließlich Tensid(e) enthält. Ein bevorzugtes erfindungsgemäßes Verfahren ist dabei dadurch gekennzeichnet, daß das tensidhaltige Aktivsubstanzgemisch mindestens 95 Gew.-% Tenside aus der Gruppe der nichtionischen Tenside und/oder anionischen Tenside und/oder kationischen Tenside und/oder amphoteren Tenside enthält. Auf Grund ihrer Bedeutung für die Wasch- und Reinigungsmittel werden jedoch solche Verfahren besonders bevorzugt bei denen das tensidhaltige Aktivsubstanzgemisch ausschließlich nichtionische Tenside und/oder anionische Tenside enthält.

Im Rahmen der vorliegenden Erfindung hat es sich weiterhin als vorteilhaft erwiesen, die Gesamtmenge des nachträglich auf den Formkörper beaufschlagten tensidhaltigen Aktivsubstanzgemisches zu begrenzen. Es hat sich dabei erwiesen, daß die maximal zudosierbare Menge an tensidhaltigem Aktivsubstanzgemisch durch die Porosität der Formkörperoberfläche sowie den Trocknungsgrad der formgebend verarbeiteten Granulate und Pulver beeinflußt wird. Je höher die Porosität und/oder je höher der Trocknungsgrad der verarbeiteten Granulate und Pulver, desto höher das Aufnahmevermögen des Formkörpers für die nachträglich aufgetragenen tensidhaltigen Aktivsubstanzgemische. Für die erfindungsgemäße Herstellung von Wasch- und Reinigungsmittelformkörpern hat sich in diesem Zusammenhang ein Verfahren als besonders vorteilhaft erwiesen in welchem das Gewicht des nachträglich beaufschlagten tensidhaltigen Aktivsubstanzgemisches maximal 7 Gew.-%, vorzugsweise maximal 5 Gew.-%, besonders bevorzugt maximal 2 Gew.-% und insbesondere maximal 1 Gew.-% des Gesamtgewichts des Formkörpers vor der Beaufschlagung entspricht.

Als tensidhaltige Aktivsubstanzgemische werden im Rahmen der vorliegenden Anmeldung beispielsweise Lösungen oder Emulsion von Tensiden in Lösungs- oder Dispersionsmittel oder auch in einem Dispersionsmittel suspendierte tensidhaltige feste Trägermaterialien bezeichnet. Die tensidhaltigen Aktivsubstanzgemische können dabei vorzugsweise weiterhin einen oder mehrere übliche Bestandteile von Wasch- und Reinigungsmitteln umfassen, wobei insbesondere Substanzen aus der Gruppe der Duftstoffe bevorzugt sind.

Als vorteilhafte Lösungs- oder Dispersionsmittel für die Tenside haben sich neben Wasser insbesondere die nichtwäßrigen Lösungsmittel erwiesen. Zu den nichtwässrigen Lösungsmittel, welche als Bestandteil der tensidhaltigen Aktivsubstanzgemische eingesetzt werden können, zählen insbesondere die organischen Lösungsmittel, von denen hier nur die wichtigsten aufgeführt sein können: Alkohole (Methanol, Ethanol, Propanole, Butanole, Octanole, Cyclohexanol), Glykole (Ethylenglykol, Diethylenglykol), Ether u. Glykolether (Diethylether, Dibutylether, Anisol, Dioxan, Tetrahydrofuran, Mono-, Di-, Tri-, Polyethylenglykolether), Ketone (Aceton, Butanon, Cyclohexanon), Ester (Essigsäureester, Glykolester), Amide u. a. Stickstoff-Verbindungen (Dimethylformamid, Pyridin, N-Methylpyrrolidon, Acetonitril), Schwefel-Verindungen (Schwefelkohlenstoff, Dimethylsulfoxid, Sulfolan), Nitro-Verbindungen (Nitrobenzol), Halogenkohlenwasserstoffe (Dichlormethan, Chloroform, Tetrachlormethan, Tri-, Tetrachlorethen, 1,2-Dichlorethan, Chlorfluorkohlenstoffe), Kohlenwasserstoffe (Benzine, Petrolether, Cyclohexan, Methylcyclohexan, Decalin, Terpen-Lösungsmittel, Benzol, Toluol, Xylole). Alternativ können statt der reinen Lösungsmittel auch deren Gemische, welche beispielsweise die Lösungseigenschaften verschiedener Lösungsmittel vorteilhaft vereinigen, eingesetzt werden.

Weitere bevorzugte Lösungs- oder Dispersionsmittel für die eingesetzten Tenside sind schmelz- oder erweichbare Substanzen aus der Gruppe der Wachse, Paraffine, Polyalkylenglycole usw. Die schmelz- oder erweichbaren Substanzen weisen vorzugsweise einen Schmelzbereich auf, der zwischen etwa 45°C und etwa 75°C liegt. Das heißt im vorliegenden Fall, daß der Schmelzbereich innerhalb des angegebenen Temperaturintervalls auftritt und bezeichnet nicht die Breite des Schmelzbereichs.

Unter "Wachsen" wird eine Reihe natürlicher oder künstlich gewonnener Stoffe verstanden, die in der Regel über 40°C ohne Zersetzung schmelzen und schon wenig oberhalb des Schmelzpunktes verhältnismäßig niedrigviskos und nicht fadenziehend sind. Sie weisen eine stark temperaturabhängige Konsistenz und Löslichkeit auf. Nach ihrer Herkunft teilt man die Wachse in drei Gruppen ein, die natürlichen Wachse, chemisch modifizierte Wachse und die synthetischen Wachse.

Zu den natürlichen Wachsen zählen beispielsweise pflanzliche Wachse wie Candelillawachs, Camaubawachs, Japanwachs, Espartograswachs, Korkwachs, Guarumawachs, Reiskeimölwachs, Zuckerrohrwachs, Ouricurywachs, oder Montanwachs, tierische Wachse wie Bienenwachs, Schellackwachs, Walrat, Lanolin (Wollwachs), oder Bürzelfett, Mineralwachse wie Ceresin oder Ozokerit (Erdwachs), oder petrochemische Wachse wie Petrolatum, Paraffinwachse oder Mikrowachse.

Zu den chemisch modifizierten Wachsen zählen beispielsweise Hartwachse wie Montanesterwachse, Sassolwachse oder hydrierte Jojobawachse.

Unter synthetischen Wachsen werden in der Regel Polyalkylenwachse oder Polyalkylenglycolwachse verstanden. Als schmelz- oder erweichbaren Substanzen für die durch Abkühlung aushärtenden Massen einsetzbar sind auch Verbindungen aus anderen Stoffklassen, welche die genannten Erfordernisse hinsichtlich des Erweichungspunkts erfüllen. Als geeignete synthetische Verbindungen haben sich beispielsweise höhere Ester der Phthalsäure, insbesondere Dicyclohexylphthalat, das kommerziell unter dem Namen Unimoll® 66 (Bayer AG) erhältlich ist, erwiesen. Geeignet sind auch synthetisch hergestellte Wachse aus niederen Carbonsäuren und Fettalkoholen, beispielsweise Dimyristyl Tartrat, das unter dem Namen Cosmacol® ETLP (Condea) erhältlich ist. Umgekehrt sind auch synthetische oder teilsynthetische Ester aus niederen Alkoholen mit Fettsäuren aus nativen Quellen einsetzbar. In diese Stoffklasse fällt beispielsweise das Tegin® 90 (Goldschmidt), ein Glycerinmonostearat-palmitat. Auch Schellack, beispielsweise Schellack-KPS-Dreiring-SP (Kalkhoff GmbH) ist erfindungsgemäß als schmelz- oder erweichbaren Substanzen einsetzbar.

Ebenfalls zu den Wachsen im Rahmen der vorliegenden Erfindung werden beispielsweise die sogenannten Wachsalkohole gerechnet. Wachsalkohole sind höhermolekulare, wasserunlösliche Fettalkohole mit in der Regel etwa

22 bis 40 Kohlenstoffatomen. Die Wachsalkohole kommen beispielsweise in Form von Wachsestem höhermolekularer Fettsäuren (Wachssäuren) als Hauptbestandteil vieler natürlicher Wachse vor. Beispiele für Wachsalkohole sind Lignocerylalkohol (1-Tetracosanol), Cetylalkohol, Myristylalkohol oder Melissylalkohol. Weitere einsetzbare schmelz und erweichbare Substanzen sind die Wollwachsalkohole, worunter man Triterpenoid- und Steroidalkohole, beispielsweise Lanolin, versteht, das beispielsweise unter der Handelsbezeichnung Argowax® (Pamentier & Co) erhältlich ist. Ebenfalls zumindest anteilig als Bestandteil der schmelz- oder erweichbaren Substanzen einsetzbar sind im Rahmen der vorliegenden Erfindung Fettsäureglycerinester oder Fettsäurealkanolamide aber gegebenenfalls auch wasserunlösliche oder nur wenig wasserlösliche Polyalkylenglycolverbindungen.

Besonders bevorzugte schmelz- oder erweichbaren Substanzen sind solche aus der Gruppe der Polyethylenglycole (PEG) und/oder Polypropylenglycole (PPG) enthält, wobei Polyethylenglycole mit Molmassen zwischen 1500 und 36.000 bevorzugt, solche mit Molmassen von 2000 bis 6000 besonders bevorzugt und solche mit Molmassen von 3000 bis 5000 insbesondere bevorzugt sind. Entsprechende Verfahren, die dadurch gekennzeichnet sind, daß die die plastisch verformbare(n) Masse(n) mindestens einen Stoff aus der Gruppe der Polyethylenglycole (PEG) und/oder Polypropylenglycole (PPG) enthält/enthalten, sind bevorzugt.

Hierbei sind Massen besonders bevorzugt, die als einzige schmelz- oder erweichbaren Substanzen Propylenglycole (PPG) und/oder Polyethylenglycole (PEG) enthalten. Erfindungsgemäß einsetzbare Polypropylenglycole (Kurzzeichen PPG) sind Polymere des Propylenglycols, die der nachfolgenden allgemeinen Formel

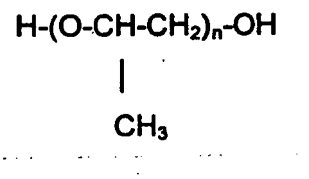

genügen, wobei n Werte zwischen 10 und 2000 annehmen kann. Bevorzugte PPG weisen Molmassen zwischen 1000 und 10.000, entsprechend Werten von n zwischen 17 und ca. 170, auf.

Erfindungsgemäß bevorzugt einsetzbare Polyethylenglycole (Kurzzeichen PEG) sind dabei Polymere des Ethylenglycols, die der allgemeinen Formel

$$H\text{-}(O\text{-}CH_2\text{-}CH_2)_n\text{-}OH$$

genügen, wobei n Werte zwischen 20 und ca. 1000 annehmen kann. Die vorstehend genannten bevorzugten Molekulargewichtsbereiche entsprechen dabei bevorzugten Bereichen des Wertes n in Formel IV von ca. 30 bis ca. 820 (genau: von 34 bis 818), besonders bevorzugt von ca. 40 bis ca. 150 (genau: von 45 bis 136) und insbesondere von ca. 70 bis ca. 120 (genau: von 68 bis 113).

In einer weiteren bevorzugten Ausführungsform enthalten die erfindungsgemäß eingesetzten schmelz- und erweichbaren Substanzen im überwiegenden Anteil Paraffinwachs. Das heißt, daß wenigstens 50 Gew.-% der insgesamt enthaltenen schmelz- oder erweichbaren Substanzen, vorzugsweise mehr, aus Paraffinwachs bestehen. Besonders geeignet sind Paraffinwachsgehalte (bezogen auf die Gesamtmenge schmelz- oder erweichbarer Substanzen) von etwa 60 Gew.-%, etwa 70 Gew.-% oder etwa 80 Gew.- %, wobei noch höhere Anteile von beispielsweise mehr als 90 Gew.-% besonders bevorzugt sind. In einer besonderen Ausführungsform der Erfindung besteht die Gesamtmenge der eingesetzten schmelz- odererweichbaren Substanzen mindestens einer Masse ausschließlich aus Paraffinwachs.

Paraffinwachse weisen gegenüber den anderen genannten, natürlichen Wachsen im Rahmen der vorliegenden Erfindung den Vorteil auf, daß in einer alkalischen Reinigungsmittelumgebung keine Hydrolyse der Wachse stattfindet (wie sie beispielsweise bei den Wachsestem zu erwarten ist), da Paraffirwachs keine hydrolisierbaren Gruppen enthält.

Paraffinwachse bestehen hauptsächlich aus Alkanen, sowie niedrigen Anteilen an Iso- und Cycloalkanen. Das erfindungsgemäß einzusetzende Paraffin weist bevorzugt im wesentlichen keine Bestandteile mit einem Schmelzpunkt von mehr als 70°C, besonders bevorzugt von mehr als 60°C auf. Anteile hochschmelzender Alkane im Paraffin können bei Unterschreitung dieser Schmelztemperatur in der Reinigungsmittelflotte nicht erwünschte Wachsrückstände auf den zu reinigenden Oberflächen oder dem zu reinigenden Gut hinterlassen. Solche Wachsrückstände führen in der Regel zu einem unschönen Aussehen der gereinigten Oberfläche und sollten daher vermieden werden.

Bevorzugt zu verarbeitende schmelz- oder erweichbaren Substanzen oder Substanzgemische enthalten mindestens ein Paraffinwachs mit einem Schmelzbereich von 50°C bis 60°C, wobei bevorzugte Verfahren dadurch gekennzeichnet sind, daß die verformbare(n) Masse(n) ein Paraffinwachs mit einem Schmelzbereich von 50°C bis 55°C enthält/enthalten.

Bevorzugte Lösungs- oder Dispersionsmittel für die eingesetzten Tenside in den tensidhaltigen Aktivsubstanzgemischen sind weiterhin ausgewählt aus der Gruppe der wasserlöslichen Polymere, von denen nur die wichtigsten aufgezählt werden sollen: wasserlösliche nichtionische Polymere (Polyvinylpyrrolidone, Vinylpyrrolidonvinylester-Copolymere, Celluloseether); wasserlösliche amphotere Polymere (Alkylacrylamid/Acrylsäure-Copolymere, Alkylacrylamid/Methacrylsäure-Copolymere, Alkylacrylamid/Methylmethacrylsäure-Copolymere, Alkylacrylamld/Acrylsäure/Alkylamino-alkyl(meth)acrylsäure -Copolymere, Alkylacrylamid/Methacrylsäure/Alkylaminoalkyl(meth)acrylsäure-Copolymere Alkylacrylamid/Methyl-methacrylsäure/Alkylaminoalkyl(meth)acrylsäure-Copolymere, Alkylacrylamid/Alkymethacrylat/Alkylaminoethylmethacrylat/Alkylmethacrylat-Copolymere); Copolymere aus ungesättigten Carbonsäuren, kationisch derivatisierten ungesättigten Carbonsäuren, gegebenenfalls weiteren ionischen oder nichtionogenen Monomeren; wasserlöslichen zwitterionischen Polymere (Acrylamidoalkyltrialkylammoniumchlorid/Acrylsäure-Copolymere sowie deren Alkali- und Ammoniumsalze, Acrylamidoalkyltrialkylammoniumchlorid/Methacrylsäure-Copolymere sowie deren Alkali- und Ammoniumsalze, Methacroylethylbetain/Methacrylat-Copolymere); wasserlösliche anionische Polymere (Vinylacetat/Crotonsäure-Copolymere, Vinylpyrrolidon/Vinylacrylat-Copolymere, Acrylsäure/Ethylacrylat/N-tert.Butylacrylamid-Terpolymere, Pfropfpolymere aus Vinylestern, Estem von Acrylsäure oder Methacrylsäure allein oder im Gemisch, copolymerisiert mit Crotonsäure, Acrylsäure oder Methacrylsäure mit Polyalkylenoxiden und/ oder Polykalkylenglycolen); gepfropfte und vernetzte Copolymere (aus der Copolymerisation von a) mindesten einem Monomeren vom nicht-ionischen Typ, b) mindestens einem Monomeren vom ionischen Typ, c) von Polyethylenglycol und d) einem Vernetzter; durch Copolymerisation mindestens eines Monomeren jeder der drei folgenden Gruppen erhaltenen Copolymere: a) Ester ungesättigter Alkohole und kurzkettiger gesättigter Carbonsäuren und/oder Ester kurzkettiger gesättigter Alkohole und ungesättigter Carbonsäuren, b) ungesättigte Carbonsäuren, c) Ester langkettiger Carbonsäuren und ungesättigter Alkohole und/oder Ester aus den Carbonsäuren aus der Gruppe der gesättigten oder ungesättigten, geradkettigen oder verzweigten $C_{8-18}$-Alkohole; Terpolymere aus Crotonsäure, Vinylacetat und einem Allyl- oder Methallylester; Tetra- und Pentapolymere aus a) Crotonsäure oder Allyloxyessigsäure, b) Vinylacetat oder Vinylpropionat, c) verzweigten Allyl- oder Methallylestern, d) Vinylethern, Vinylestern oder geradkettigen Allyl- oder Methallylestern; Crotonsäure-Copolymere mit einem oder mehreren Monomeren aus der Gruppe Ethylen, Vinylbenzol, Vinylmethylether, Acrylamid und deren wasserlöslicher Salze; Terpolymere aus Vinylacetat, Crotonsäure und Vinylestern einer gesättigten aliphatischen in $\alpha$-Stellung verzweigten Monocarbonsäure); wasserlösliche kationische Polymere (quaternierte Cellulose-Derivate, Polysiloxane mit quaternären Gruppen, kationischen Guar-Derivate, polymere Dimethyldiallylammoniumsalze und deren Copolymere mit Estern und Amiden von Acrylsäure und Methacrylsäure, Copolymere des Vinylpyrrolidons mit quaternierten Derivaten des Dialkylaminoacrylats und - methacrylats, Vinylpyrrolidon-Methoimidazoliniumchlorid-Copolymere, quaternierter Polyvinylalkohol, unter den INCI-Bezeichnungen Polyquaternium 2, Polyquaternium 17, Polyquaternium 18 und Polyquaternium 27 angegeben Polymere). Wasserlösliche Polymere im Sinne der Erfindung sind solche Polymere, die bei Raumtemperatur in Wasser zu mehr als 2,5 Gew.-% löslich sind.

Die bevorzugten Lösungs- oder Dispersionsmittel aus den Gruppe der nichtwäßrigen Lösungsmittel, der Wachse, Paraffine, Polyalkylenglycole oder der wasserlöslichen Polymere können in dem erfindungsgemäßen Verfahren allein oder auch als Mischungen eingesetzt werden. Ein bevorzugter Gegenstand der vorliegenden Anmeldung ist daher ein Verfahren in welchem ein tensidhaltiges Aktivsubstanzgemisch mit einem Gehalt an nichtwässrigen Lösungsmitteln und/oder Wachsen und/oder Paraffinen und/oder Polyalkylenglycolen und/oder wasserlöslichen Polymere von mindestens 10 Gew.-%, vorzugsweise mindestens 30 Gew.-% und besonders bevorzugt von mindestens 50 Gew.-% eingesetzt wird.

Das erfindungsgemäße Verfahren beruht, gemäß den vorhergehenden Angaben, auf der nachträglichen Beaufschlagung eines Wasch- und/oder Reinigungsmitteformkörpers mit einem tensidhaltigen Aktivsubstanzgemisch. Das der Formgebung zugrundeliegende Verfahren zur Herstellung des Formkörpers kann dabei frei aus der großen Zahl dem Fachmann bekannter Formgebungsverfahren ausgewählt werden. Der grundsätzliche Erfolg des erfindungsgemäßen Verfahrens wird durch die Wahl des formgebenden Verfahrens nicht beeinflußt. Dessen ungeachtet haben sich jedoch die Tablettierung, Extrusion, Walzenkompaktierung, Erstarrung, Sinterung und Kristallisation der Wasch- und/oder Reinigungsmittelvorgemische zu Formkörpern als besonders vorteilhaft erwiesen. Insbesondere die Tablettierung wird im Rahmen der Erfindung als formgebendes Verfahren besonders bevorzugt.

Die Raumformen der formgebend verarbeiteten Wasch- und/oder Reinigungsmittelvorgemische sind in ihren Dimensionen vorteilhafterweise der Einspülkammer von handelsüblichen Wasch- oder Geschirrspülmaschinen angepaßt, so daß diese direkt in die entsprechenden Fächer der Einspülkammer eindosiert werden können. Alternativ können erfindungsgemäße Formkörper aber natürlich auch direkt in die Waschtrommel bzw. den Maschineninnenraum dosiert werden, wobei gegebenenfalls Dosierhilfen Verwendung finden können.

Im Rahmen der vorliegenden Erfindung können Formkörper in praktisch allen sinnvoll handhabbaren Ausgestaltungen hergestellt werden, beispielsweise also in Form einer Tafel, in Stab- bzw. Barrenform, Würfel, Quader und entsprechendes Raumelement mit ebenen Seitenflächen sowie insbesondere zylinderförmige Ausgestaltungen mit kreisförmigem oder ovalem Querschnitt. Diese letzte Ausgestaltung erfasst dabei die Darbietungsform von der eigentlichen Tablette bis zu kompakten Zylinderstücken mit einem Verhältnis von Höhe zu Durchmesser oberhalb 1. Weitere bevorzugte geometrische Formen, welche sich vorzugsweise durch eines der oben genannten formgebenden Verfahren

herstellen lassen sind insbesondere konkave, konvexe, bikonkave, bikonvexe, kubische, tetragonale, orthorhombische, zylindrische, sphärische, zylindersegmentartige, scheibenförmige, tetrahedrale, dodecahedrale, octahedrale, konische, pyramidale, ellipsoide, fünf-, sieben- und achteckig-prismatische sowie rhombohedrische Formen. Auch völlig irreguläre Grundflächen wie Pfeil- oder Tierformen, Bäume, Wolken usw. können im formgebenden Verfahren realisiert werden.

Weist der Formkörper Ecken und Kanten auf, so sind diese vorzugsweise abgerundet. Als zusätzliche optische Differenzierung ist eine Ausführungsform mit abgerundeten Ecken und abgeschrägten ("angefassten") Kanten bevorzugt.

Ein weiterer bevorzugter Gegenstand der vorliegenden Anmeldung ist daher ein Verfahren zur Herstellung ein- oder mehrphasiger Wasch- und/oder Reinigungsmittelformkörper, dadurch gekennzeichnet, daß es sich bei dem formgebenden Verfahren um eine Tablettierung und/oder Extrusion und/oder Walzenkompaktierung und/oder Erstarrung und/oder Sinterung und/oder Kristallisation, insbesondere jedoch um eine Tablettierung, handelt.

Die Tablettierung des Wasch- und/oder Reinigungsmittelvorgemisches ist nach dem zuvor Gesagten ein im Rahmen der vorliegenden Erfindung bevorzugtes Formgebungsverfahren. Die aus diesem Verfahren resultierenden Tabletten können sowohl ein- als auch mehrphasig sein, wobei unter dem Begriff der mehrphasigen Tablette beispielsweise die sogenannten Mehrschichttabletten (Sandwichtabletten), Manteltabletten (Dry-coated-Tabletten) oder Punkttabletten (Bull-eye-Tabletten) zusammengefaßt sind. Besonders bevorzugt sind im Rahmen der vorliegenden Anmeldung jedoch ein- oder mehrphasige Tabletten, welche eine an ihrer Ober- und/oder Unterseite eine Kavität aufweisen (Muldentabletten). Wie bereits für den Formkörper beschrieben kann auch die Form der Mulde frei gewählt werden, wobei Tabletten bevorzugt sind, in denen mindestens eine Mulde eine konkave, konvexe, kubische, tetragonale, orthorhombische, zylindrische, sphärische, zylindersegmentartige, scheibenförmige, tetrahedrale, dodecahedrale, octahedrale, konische, pyramidale, ellipsoide, fünf-, sieben- und achteckig-prismatische sowie rhombohedrische Form annehmen kann. Auch völlig irreguläre Muldenformen wie Pfeil- oder Tierformen, Bäume, Wolken usw. können realisiert werden. Wie auch bei den Formkörpern sind Mulden mit abgerundeten Ecken und Kanten oder mit abgerundeten Ecken und angefassten Kanten bevorzugt. In zwei- oder mehrphasigen Formkörpern ist die beschriebene Kavität nicht notwendigerweise auf das Raumvolumen einer der äußeren Phasen begrenzt, sondem kann in speziellen Ausgestaltungsformen auch über eine oder mehrere Phasengrenzen in eine oder mehrere weitere Phasen hineinragen.

Im Rahmen der vorliegenden Erfindung wird daher weiterhin ein Verfahren bevorzugt, in welchem der Formkörper eine Mulde aufweist. Die Größe der Mulde bzw. Kavität im Vergleich zum gesamten Formkörper richtet sich nach dem gewünschten Verwendungszweck der Formkörper. Je nachdem, ob und mit welchen Substanzen in welchen Aggregatzuständen die Mulde bzw. Kavität befüllt werden soll, kann die Größe der Mulde variieren. Unabhängig vom Verwendungszweck sind Wasch- und Reinigungsmitteltabletten bevorzugt, bei denen das Volumenverhältnis von Basisformkörper zu Muldenvolumen im Bereich von 1:1 bis 100:1, vorzugsweise von 2:1 bis 80:1, besonders bevorzugt von 3:1 bis 50:1 und insbesondere von 4:1 bis 30:1 beträgt.

Ähnliche Aussagen lassen sich zu den Oberflächenanteilen machen, die der Basisformkörper bzw. die Muldenöffnung an der Gesamtoberfläche des Formkörpers ausmachen. Hier sind Wasch- oder Reinigungsmitteltabletten bevorzugt, bei denen die Oberfläche der Kavitätsöffnung 1 bis 25 %, vorzugsweise 2 bis 20 %, besonders bevorzugt 3 bis 15 % und insbesondere 4 bis 10 % der Gesamtoberfläche der Tablette ausmacht.

Hat beispielsweise der Gesamtformkörper Abmessungen von 20 x 20 x 40 mm und somit eine Gesamtoberfläche von 40 $cm^2$, so sind Mulden bevorzugt, die eine Oberfläche von 0,4 bis 10 $cm^2$, vorzugsweise 0,8 bis 8 $cm^2$, besonders bevorzugt von 1,2 bis 6 $cm^2$ und insbesondere von 1,6 bis 4 $cm^2$ aufweisen.

Ein erfindungsgemäßes Verfahren ist bezüglich der Beaufschlagung eines formgebend verarbeiteten Wasch- und Reinigungsmittelvorgemisches mit einem tensidhaltigen Aktivsubstanzgemisch nicht auf einen bestimmten Teil der Oberfläche dieses Formkörpers festgelegt. Auch ist es möglich die gesamte Oberfläche des Formkörpers mit dem tensidhaltigen Aktivsubstanzgemisch zu beaufschlagen. Bevorzugt im Rahmen der vorliegenden Erfindung ist jedoch ein Verfahren, in welchem die Beaufschlagung des Formkörpers mit dem tensidhaltigen Aktivsubstanzgemisch in der Muldenfläche erfolgt. Als Beaufschlagung des Formkörpers in der Muldenfläche wird im Rahmen der vorliegenden Anmeldung eine solche Beaufschlagung verstanden, in welcher mindestens 75 Gew.-%, vorzugsweise mindestens 85 Gew.-% und besonders bevorzugt mindestens 95 Gew.-% des beaufschlagten tensidhaltigen Aktivsubstanzgemisch auf die Muldenfläche aufgetragen wird.

Auch in der Wahl der Methode zur Beaufschlagung des Formkörpers mit dem tensidhaltigen Aktivsubstanzgemisch(en) unterliegt das erfindungsgemäße Verfahren keinerlei Einschränkungen. So kann die Beaufschlagung beispielsweise durch Tauchen, Besprühen oder Umwälzen in einem Trommelcoater oder Dragierkessel oder eine Kombination dieser Methoden erfolgen. Es können sowohl Lösungen als auch Schmelzen der tensidhaltigen Aktivsubstanzgemische verarbeitet werden. Auf Grund der einfacheren Verfahrensführung und höherer Durchsatzzahlen wird im Rahmen der vorliegenden Erfindung jedoch die Beaufschlagung des Formkörpers mit dem tensidhaltigen Aktivsubstanzgemisch durch Besprühen bevorzugt. Hierzu können zwei Techniken benützt werden. Beim diskontinuierlichen Umhüllen werden jeweils kleine Portionen aufgesprüht und gegebenenfalls anschließend im Luftstrom angetrocknet, während beim kontinuierlichen Verfahren die tensidhaltigen Aktivsubstanzgemische ohne Unterbrechung aufgesprüht und gegebenenfalls durch gleichzeitig eingeblasene Luft getrocknet werden. Das Aufsprühen selbst kann mittels Einstoff-

bzw. Hochdrucksprühdüsen, Zweistoffsprühdüsen oder Dreistoffsprühdüsen erfolgen. Zum Versprühen mit Einstoffsprühdüsen ist die Anwendung eines höhen Massedruckes (5-15 MPa) erforderlich, während das Versprühen in Zweistoffsprühdüsen mit Hilfe eines Preßluftstromes (bei 0,15-0,3 MPa) erfolgt. Die Versprühung mit Zweistoffsprühdüsen ist besonders im Hinblick auf eventuelle Verstopfungen der Düse günstiger, aber durch den hohen Preßluftverbrauch aufwendiger. Als moderne Weiterentwicklung gibt es die Dreistoffsprühdüsen, welche neben dem Preßluftstrom zur Zerstäubung ein weiteres Luftführungssystem, das Verstopfungen und Tropfenbildung an der Düse verhindem soll. Zur Realisierung eines hohen Durchsatzes und zur Verringerung der Verfahrenskosten wird im Rahmen des erfindungsgemäßen Verfahrens, der Einsatz von Einstoffsprühdüsen zur nachträglichen Beaufschlagung von Formkörpem mit tensidhaltigen Aktivsubstanzgemischen bevorzugt, wobei die Dosierung mit einer solchen Einstoffsprühdüse vorzugsweise mit einer Taktrate oberhalb 500 Dosiervorgängen pro Minute, besonders bevorzugt oberhalb 700 Dosiervorgängen pro Minute und insbesondere oberhalb 900 Dosiervorgängen pro Minute erfolgt.

Zusätzlich zu den tensidhaltigen Aktivsubstanzgemischen können selbstverständlich auch tensidfreie Substanzen oder Substanzgemische nach der formgebenden Verarbeitung auf den Formkörper aufdosiert werden. In diesem Zusammenhang besonders bevorzugte weitere tensidfreie Aktivsubstänzen sind die Siegelmaterialien. In einer weiteren bevorzugten Ausführungsform des erfindungsgemäßen Verfahrens wird der Formkörper außer mit einem tensidhaltigen Aktivsubstanzgemisch auch mit einem Siegelmaterial beaufschlagt, wobei diese Beaufschlagung vorzugsweise in der Muldenfläche erfolgt. Diese Siegelmaterialien können ebenso wie weitere Aktivsubstanzgemische gleichzeitig oder (in beliebiger zeitlicher Reihenfolge) zeitlich getrennt zudosiert werden. Ebenso können diese Materialien sowohl auf den gleichen Oberflächenbereich als auch auf unterschiedliche Oberflächenbereiche aufdosiert werden. Auch läßt sich die Zudosierung der tensidhaltigen Aktivsubstanzgemische und/oder der Siegelmaterialien mehrfach wiederholen, beispielsweise durch abwechselndes Auftragen von tensidhaltigen und tensidfreien Substanzgemischen und/oder Substanzen. So ist es beispielsweise im Rahmen der vorliegenden Erfindung besonders bevorzugt die Mulde einer Tablette zunächst mit einem tensidhaltigen Aktivsubstanzgemisch und anschließend mit einem Siegelmaterial zu beaufschlagen. Eine weitere bevorzugte Verfahrensführung besteht darin, die Mulde einer Muldentablette zunächst mit einem Siegelmaterial, dann mit einem tensidhaltigen Aktivsubstanzgemisch und schließlich erneut mit einem Siegelmaterial zu beaufschlagen. Werden das tensidhaltige Aktivsubstanzgemisch und das Siegelmaterial und/oder eine weiteres Aktivsubstanzgemisch örtlich getrennt aufgetragen, so können sich die jeweils nachträglich beaufschlagten Oberflächenbereiche natürlich überschneiden, wobei diese Überschneidungen sowohl durch gezielte Prozeßführung als auch durch produktionstechnische Unzulänglichkeiten hervorgerufen werden können. Als eine örtlich getrennten Beaufschlagung wird im Rahmen der vorliegenden Anmeldung demnach eine Beaufschlagung auf zwei unterschiedlichen Oberflächenbereichen bezeichnet, wobei die Mittelpunkte der jeweiligen nicht übereinstimmen. Als Siegelmaterialien eignen sich im Rahmen der vorliegenden Anmeldung insbesondere die weiter oben genannten Wachse, Paraffine, Polyalkylenglycole und/oder wasserlöslichen Polymere, wobei der Einsatz von Polyalkylenglycol(en), insbesondere von Polyethylenglycol(en), im Rahmen der vorliegenden Anmeldung besonders bevorzugt wird. Als Siegelmaterialien eignen sich natürlich auch Gemische der genannten Siegelmaterialien miteinander und/oder mit Lösungsmitteln. Im Rahmen der vorliegenden Erfindung ist es jedoch bevorzugt, Siegelmaterialien oder Mischungen dieser Materialien in Form ihrer Schmelzen einzusetzen. Für eine ausführliche Beschreibung bevorzugter Siegelmaterialien wird auf die obigen Ausführungen verwiesen.

Die Versiegelung von nachträglich mit tensidhaltigen Aktivsubstanzgemischen beaufschlagten erfindungsgemäßen Wasch- und/oder Reinigungsmittelformkörpern hat den Vorteil, ein Verschmieren des (der) tensidhaltigen Aktivsubstanzgemische(s) oder Teile dieses (dieser) Gemische(s) zu verhindern. Weiterhin bietet die Versiegelung ebenso wie die nachträgliche Dosierung tensidhaltiger Aktivsubtanzgemische die Möglichkeit der nachfolgenden Verklebung des ursprünglichen ein- oder mehrphasigen Wasch- und/oder Reinigungsmittelformkörpers mit einem weiteren ein- oder mehrphasigen Wasch- und/oder Reinigungsmittelformkörpers durch das Siegelmaterial und/oder das tensidhaltige Aktivsubstanzgemisch, beispielsweise, wenn diese Aktivsubstanzgemische neben den Tensiden auch erweichbare oder schmelzbare Substanz(en) wie Wachs(e), Paraffin(e) und/oder Polyalkylenglycol(e) enthalten . Ein weiterer bevorzugter Gegenstand der vorliegenden Anmeldung ist daher ein Verfahren, dadurch gekennzeichnet, daß auf das tensidhaltige Aktivsubstanzgemisch und/oder das Siegelmaterial ein weiterer ein- oder mehrphasiger Wasch- und/oder Reinigungsmittelformkörper aufgebracht und haftend verklebt wird. Ein weiterer Gegenstand der vorliegenden Anmeldung ist die Verwendung von Gemischen, enthaltend Polyalkylenglycol(e) und Tensid(e), als Haftmittel.

Nach dem erfindungsgemäßen Verfahren hergestellte bevorzugte ein- oder mehrphasige Wasch- und/oder Reinigungsmittelformkörper enthalten neben Tensiden und Gerüststoffen optional auch weitere wasch- und reinigungsaktive Substanzen, bevorzugt aus der Gruppe der Builder, Cobuilder, Bleichmittel, Bleichaktivatoren, Enzyme, Farbstoffe, Elektrolyte, pH-Stellmittel, Fluoreszenzmittel, Farbstoffe, Duftstoffe, Hydrotope, Schauminhibitoren, Silikonöle, Antiredepositionsmittel, optischen Aufheller, Vergrauungsinhibitoren, Einlaufverhinderer, Knitterschutzmittel, Farbübertragungsinhibitoren, antimikrobiellen Wirkstoffe, Germizide, Fungizide, Antioxidantien, Korrosionsinhibitoren, Antistatika, Bügelhilfsmittel, Phobier- und Imprägniermittel, Quell- und Schiebefestmittel und/oder UV-Absorber. Diese Bestandteile können dabei sowohl in den formgebend verarbeiteten Wasch- und Reinigungsmitteln, als auch in den nachträglich dosierten tensidhaltigen Aktivsubstanzgemischen enthalten sein. Einige dieser Inhaltsstoffe werden in der Folge näher

beschrieben.

**Builder**

Gemäß der vorliegenden Erfindung können in die Wasch- und Reinigungsmittel alle üblicherweise in Wasch- und Reinigungsmitteln eingesetzten Gerüststoffe eingearbeitet sein, insbesondere Silikate, Carbonate, organische Cobuilder und auch die Phosphate.

Geeignete kristalline, schichtförmige Natriumsilikate besitzen die allgemeine Formel $NaMSi_xO_{2x+1} \cdot H_2O$, wobei M Natrium oder Wasserstoff bedeutet, x eine Zahl von 1,9 bis 4 und y eine Zahl von 0 bis 20 ist und bevorzugte Werte für x 2, 3 oder 4 sind. Bevorzugte kristalline Schichtsilikate der angegebenen Formel sind solche, in denen M für Natrium steht und x die Werte 2 oder 3 annimmt. Insbesondere sind sowohl β- als auch δ-Natriumdisilikate $Na_2Si_2O_5 \cdot yH_2O$ bevorzugt.

Einsetzbar sind auch amorphe Natriumsilikate mit einem Modul $Na_2O : SiO_2$ von 1:2 bis 1:3,3, vorzugsweise von 1:2 bis 1:2,8 und insbesondere von 1:2 bis 1:2,6, welche löseverzögert sind und Sekundärwascheigenschaften aufweisen. Die Löseverzögerung gegenüber herkömmlichen amorphen Natriumsilikaten kann dabei auf verschiedene Weise, beispielsweise durch Oberflächenbehandlung, Compoundierung, Kompaktierung/Verdichtung oder durch Übertrocknung hervorgerufen worden sein. Im Rahmen dieser Erfindung wird unter dem Begriff "amorph" auch "röntgenamorph" verstanden. Dies heißt, daß die Silikate bei Röntgenbeugungsexperimenten keine scharfen Röntgenreflexe liefern, wie sie für kristalline Substanzen typisch sind, sondern allenfalls ein oder mehrere Maxima der gestreuten Röntgenstrahlung, die eine Breite von mehreren Gradeinheiten des Beugungswinkels aufweisen. Es kann jedoch sehr wohl sogar zu besonders guten Buildereigenschaften führen, wenn die Silikatpartikel bei Elektronenbeugungsexperimenten verwaschene oder sogar scharfe Beugungsmaxima liefern. Dies ist so zu interpretieren, daß die Produkte mikrokristalline Bereiche der Größe 10 bis einige Hundert nm aufweisen, wobei Werte bis max. 50 nm und insbesondere bis max. 20 nm bevorzugt sind. Insbesondere bevorzugt sind verdichtete/kompaktierte amorphe Silikate, compoundierte amorphe Silikate und übertrocknete röntgenamorphe Silikate.

Als Carbonate können sowohl die Monoalkalimetallsalze als auch die Dialkalimetallsalze der Kohlensäure als auch Sesquicarbonate in den Mitteln enthalten sein. Bevorzugte Alkalimetallionen stellen Natrium- und/oder Kaliumionen dar. In einer Ausführungsform kann es bevorzugt sein, das Carbonat und/oder Bicarbonat zumindest teilweise als weitere Komponente separat bzw. nachträglich zuzumischen. Auch Compounds aus beispielsweise Carbonat, Silikat und gegebenenfalls weiteren Hilfsstoffen wie beispielsweise Aniontensiden oder anderen, insbesondere organischen Buildersubstanzen, können als separate Komponente in den fertigen Mitteln vorliegen.

Selbstverständlich ist auch ein Einsatz der allgemein bekannten Phosphate als Buildersubstanzen möglich, sofem ein derartiger Einsatz nicht aus ökologischen Gründen vermieden werden sollte. Unter der Vielzahl der kommerziell erhältlichen Phosphate haben die Alkalimetallphosphate unter besonderer Bevorzugung von Pentanatrium- bzw. Pentakaliumtriphosphat (Natrium- bzw. Kaliumtripolyphosphat) in der Wasch- und Reinigungsmittel-Industrie die größte Bedeutung.

Alkalimetallphosphate ist dabei die summarische Bezeichnung für die Alkalimetall- (insbesondere Natrium- und Kalium-) -Salze der verschiedenen Phosphorsäuren, bei denen man Metaphosphorsäuren $(HPO_3)_n$ und Orthophosphorsäure $H_3PO_4$ neben höhermolekularen Vertretem unterscheiden kann. Die Phosphate vereinen dabei mehrere Vorteile in sich: Sie wirken als Alkaliträger, verhindern Kalkbeläge auf Maschinenteilen bzw. Kalkablagerungen auf dem Spülgut und tragen überdies zur Reinigungsleistung bei.

Natriumdihydrogenphosphat, $NaH_2PO_4$, existiert als Dihydrat (Dichte 1,91 $gcm^{-3}$, Schmelzpunkt 60°) und als Monohydrat (Dichte 2,04 $gcm^{-3}$). Beide Salze sind weiße, in Wasser sehr leicht lösliche Pulver, die beim Erhitzen das Kristallwasser verlieren und bei 200°C in das schwach saure Diphosphat (Dinatriumhydrogendiphosphat, $Na_2H_2P_2O_7$), bei höherer Temperatur in Natiumtrimetaphosphat ($Na_3P_3O_9$) und Maddrellsches Salz (siehe unten), übergehen. $NaH_2PO_4$ reagiert sauer; es entsteht, wenn Phosphorsäure mit Natronlauge auf einen pH-Wert von 4,5 eingestellt und die Maische versprüht wird. Kaliumdihydrogenphosphat (primäres oder einbasiges Kaliumphosphat, Kaliumbiphosphat, KDP), $KH_2PO_4$, ist ein weißes Salz der Dichte 2,33 $gcm^{-3}$, hat einen Schmelzpunkt 253° [Zersetzung unter Bildung von Kaliumpolyphosphat $(KPO_3)_x$] und ist leicht löslich in Wasser.

Dinatriumhydrogenphosphat (sekundäres Natriumphosphat), $Na_2HPO_4$, ist ein farbloses, sehr leicht wasserlösliches kristallines Salz. Es existiert wasserfrei und mit 2 Mol. (Dichte 2,066 $gcm^{-3}$, Wasserverlust bei 95°), 7 Mol. (Dichte 1,68 $gcm^{-3}$, Schmelzpunkt 48° unter Verlust von 5 $H_2O$) und 12 Mol. Wasser (Dichte 1,52 $gcm^{-3}$, Schmelzpunkt 35° unter Verlust von 5 $H_2O$), wird bei 100° wasserfrei und geht bei stärkerem Erhitzen in das Diphosphat $Na_4P_2O_7$ über. Dinatriumhydrogenphosphat wird durch Neutralisation von Phosphorsäure mit Sodalösung unter Verwendung von Phenolphthalein als Indikator hergestellt. Dikaliumhydrogenphosphat (sekundäres od. zweibasiges Kaliumphosphat), $K_2HPO_4$, ist ein amorphes, weißes Salz, das in Wasser leicht löslich ist.

Trinatriumphosphat, tertiäres Natriumphosphat, $Na_3PO_4$, sind farblose Kristalle, die als Dodecahydrat eine Dichte von 1,62 $gcm^{-3}$ und einen Schmelzpunkt von 73-76°C (Zersetzung), als Decahydrat (entsprechend 19-20% $P_2O_5$)

einen Schmelzpunkt von 100°C und in wasserfreier Form (entsprechend 39-40% $P_2O_5$) eine Dichte von 2,536 $gcm^{-3}$ aufweisen. Trinatriumphosphat ist in Wasser unter alkalischer Reaktion leicht löslich und wird durch Eindampfen einer Lösung aus genau 1 Mol Dinatriumphosphat und 1 Mol NaOH hergestellt. Trikaliumphosphat (tertiäres oder dreibasiges Kaliumphosphat), $K_3PO_4$, ist ein weißes, zerfließliches, kömiges Pulver der Dichte 2,56 $gcm^{-3}$, hat einen Schmelzpunkt von 1340° und ist in Wasser mit alkalischer Reaktion leicht löslich. Es entsteht z.B. beim Erhitzen von Thomasschlacke mit Kohle und Kaliumsulfat. Trotz des höheren Preises werden in der Reinigungsmittel-Industrie die leichter löslichen, daher hochwirksamen, Kaliumphosphate gegenüber entsprechenden Natrium-Verbindungen vielfach bevorzugt.

Tetranatriumdiphosphat (Natriumpyrophosphat), $Na_4P_2O_7$, existiert in wasserfreier Form (Dichte 2,534 $gcm^{-3}$, Schmelzpunkt 988°, auch 880° angegeben) und als Decahydrat (Dichte 1,815-1,836 $gcm^{-3}$, Schmelzpunkt 94° unter Wasserverlust). Bei Substanzen sind farblose, in Wasser mit alkalischer Reaktion lösliche Kristalle. $Na_4P_2O_7$ entsteht beim Erhitzen von Dinatriumphosphat auf >200° oder indem man Phosphorsäure mit Soda im stöchiometrischem Verhältnis umsetzt und die Lösung durch Versprühen entwässert. Das Decahydrat komplexiert Schwermetall-Salze und Härtebildner und verringert daher die Härte des Wassers. Kaliumdiphosphat (Kaliumpyrophosphat), $K_4P_2O_7$, existiert in Form des Trihydrats und stellt ein farbloses, hygroskopisches Pulver mit der Dichte 2,33 $gcm^{-3}$dar, das in Wasser löslich ist, wobei der pH-Wert der 1%igen Lösung bei 25° 10,4 beträgt.

Durch Kondensation des $NaH_2PO_4$ bzw. des $KH_2PO_4$entstehen höhermol. Natrium- und Kaliumphosphate, bei denen man cyclische Vertreter, die Natrium- bzw. Kaliummetaphosphate und kettenförmige Typen, die Natrium- bzw. Kaliumpolyphosphate, unterscheiden kann. Insbesondere für letztere sind eine Vielzahl von Bezeichnungen in Gebrauch: Schmelz- oder Glühphosphate, Grahamsches Salz, Kurrolsches und Maddrellsches Salz. Alle höheren Natrium- und Kaliumphosphate werden gemeinsam als kondensierte Phosphate bezeichnet.

Das technisch wichtige Pentanatriumtriphosphat, $Na_5P_3O_{10}$ (Natriumtripolyphosphat), ist ein wasserfrei oder mit 6 $H_2O$ kristallisierendes, nicht hygroskopisches, weißes, wasserlösliches Salz der allgemeinen Formel NaO-[P(O)(ONa)-O]n-Na mit n=3. In 100 g Wasser lösen sich bei Zimmertemperatur etwa 17 g, bei 60° ca. 20g, bei 100° rund 32 g des kristallwasserfreien Salzes; nach zweistündigem Erhitzen der Lösung auf 100° entstehen durch Hydrolyse etwa 8% Orthophosphat und 15% Diphosphat. Bei der Herstellung von Pentanatriumtriphosphat wird Phosphorsäure mit Sodalösung oder Natronlauge im stöchiometrischen Verhältnis zur Reaktion gebracht und die Lsg. durch Versprühen entwässert. Ähnlich wie Grahamsches Salz und Natriumdiphosphat löst Pentanatriumtriphosphat viele unlösliche Metall-Verbindungen (auch Kalkseifen usw.). Pentakaliumtriphosphat, $K_5P_3O_{10}$ (Kaliumtripolyphosphat), kommt beispielsweise in Form einer 50 Gew.-%-igen Lösung (> 23% $P_2O_5$, 25% $K_2O$) in den Handel. Die Kaliumpolyphosphate finden in der Wasch- und Reinigungsmittel-Industrie breite Verwendung. Weiter existieren auch Natriumkaliumtripolyphosphate, welche ebenfalls im Rahmen der vorliegenden Erfindung einsetzbar sind. Diese entstehen beispielsweise, wenn man Natriumtrimetaphosphat mit KOH hydrolysiert:

$$(NaPO_3)_3 + 2\ KOH \rightarrow Na_3K_2P_3O_{10} + H_2O$$

Diese sind erfindungsgemäß genau wie Natriumtripolyphosphat, Kaliumtripolyphosphat oder Mischungen aus diesen beiden einsetzbar; auch Mischungen aus Natriumtripolyphosphat und Natriumkaliumtripolyphosphat oder Mischungen aus Kaliumtripolyphosphat und Natriumkaliumtripolyphosphat oder Gemische aus Natriumtripolyphosphat und Kaliumtripolyphosphat und Natriumkaliumtripolyphosphat sind erfindungsgemäß einsetzbar.

Im Rahmen der vorliegenden Erfindungen bevorzugte Wasch- und Reinigungsmittel enthalten kein Natrium- und/oder Kaliumhydroxid.

## Cobuilder

Als organische Cobuilder können in den Wasch- und Reinigungsmitteln im Rahmen der vorliegenden Erfindung insbesondere Polycarboxylate / Polycarbonsäuren, polymere Polycarboxylate, Asparaginsäure, Polyacetale, Dextrine, weitere organische Cobuilder (siehe unten) sowie Phosphonate eingesetzt werden. Diese Stoffklassen werden nachfolgend beschrieben.

Brauchbare organische Gerüstsubstanzen sind beispielsweise die in Form ihrer Natriumsalze einsetzbaren Polycarbonsäuren, wobei unter Polycarbonsäuren solche Carbonsäuren verstanden werden, die mehr als eine Säurefunktion tragen. Beispielsweise sind dies Citronensäure, Adipinsäure, Bernsteinsäure, Glutarsäure, Äpfelsäure, Weinsäure, Maleinsäure, Fumarsäure, Zuckersäuren, Aminocarbonsäuren, Nitrilotriessigsäure (NTA), sofern ein derartiger Einsatz aus ökologischen Gründen nicht zu beanstanden ist, sowie Mischungen aus diesen. Bevorzugte Salze sind die Salze der Polycarbonsäuren wie Citronensäure, Adipinsäure, Bemsteinsäure, Glutarsäure, Weinsäure, Methylglycindiessigsäure, Zuckersäuren und Mischungen aus diesen.

Auch die Säuren an sich können eingesetzt werden. Die Säuren besitzen neben ihrer Builderwirkung typischerweise auch die Eigenschaft einer Säuerungskomponente und dienen somit auch zur Einstellung eines niedrigeren und milderen pH-Wertes von Wasch- oder Reinigungsmitteln. Insbesondere sind hierbei Citronensäure, Bemsteinsäure, Glutarsäure, Adipinsäure, Gluconsäure und beliebige Mischungen aus diesen zu nennen.

Als Builder sind weiter polymere Polycarboxylate geeignet, dies sind beispielsweise die Alkalimetallsalze der Polyacrylsäure oder der Polymethacrylsäure, beispielsweise solche mit einer relativen Molekülmasse von 500 bis 70000 g/mol.

Bei den für polymere Polycarboxylate angegebenen Molmassen handelt es sich im Sinne dieser Schrift um gewichtsmittlere Molmassen $M_w$ der jeweiligen Säureform, die grundsätzlich mittels Gelpermeationschromatographie (GPC) bestimmt wurden, wobei ein UV-Detektor eingesetzt wurde. Die Messung erfolgte dabei gegen einen externen Polyacrylsäure-Standard, der aufgrund seiner strukturellen Verwandtschaft mit den untersuchten Polymeren realistische Molgewichtswerte liefert. Diese Angaben weichen deutlich von den Molgewichtsangaben ab, bei denen Polystyrolsulfonsäuren als Standard eingesetzt werden. Die gegen Polystyrolsulfonsäuren gemessenen Molmassen sind in der Regel deutlich höher als die in dieser Schrift angegebenen Molmassen.

Geeignete Polymere sind insbesondere Polyacrylate, die bevorzugt eine Molekülmasse von 1000 bis 20000 g/mol aufweisen. Aufgrund ihrer überlegenen Löslichkeit können aus dieser Gruppe wiederum die kurzkettigen Polyacrylate, die Molmassen von 1000 bis 10000 g/mol, und besonders bevorzugt von 1200 bis 4000 g/mol, aufweisen, bevorzugt sein.

Besonders bevorzugt enthalten die nach dem erfindungsgemäßen Verfahren hergestellten Mittel sowohl Polyacrylate als auch Copolymere aus ungesättigten Carbonsäuren, Sulfonsäuregruppen-haltigen Monomeren sowie gegebenenfalls weiteren ionischen oder nichtionogenen Monomeren eingesetzt. Die Sulfonsäuregruppen-haltigen Copolymere werden in der Folge ausführlich beschrieben.

Mit Hilfe des erfindungsgemäßen Verfahrens lassen sich aber auch Reinigungsmittel, welche als sogenannte "3in1"-Produkte die herkömmlichen Reiniger, Klarspüler und eine Salzersatzfunktion in sich vereinen, bereitstellen. Hierzu sind erfindungsgemäß hergestellte Wasch- und Reinigungsmittel bevorzugt, die zusätzlich 0,1 bis 70 Gew.-% an Copolymeren aus

i) ungesättigten Carbonsäuren
ii) Sulfonsäuregruppen-haltigen Monomeren
iii) gegebenenfalls weiteren ionischen oder nichtionogenen Monomeren enthalten.

Diese Copolymere bewirken beispielsweise beim maschinellen Geschirrspülen, daß die mit solchen Mitteln behandelten Geschirrteile bei nachfolgenden Reinigungsvorgängen deutlich sauberer werden, als Geschirrteile, die mit Mitteln gespült wurden, welche diese Copolymere nicht enthalten. Als zusätzlicher positiver Effekt tritt eine Verkürzung der Trocknungszeit der mit derartigen Reinigungsmitteln behandelten Geschirrteile auf, d.h. der Verbraucher kann nach dem Ablauf des Reinigungsprogramms das Geschirr früher aus der Maschine nehmen und wiederbenutzen.

Unter *Trocknungszeit* wird im Rahmen der Lehre dieser Anmeldung im allgemeinen die wortsinngemäße Bedeutung verstanden, also die Zeit, die verstreicht, bis eine in einer Geschirrspülmaschine behandelte Geschirroberfläche getrocknet ist, im besonderen aber die Zeit, die verstreicht, bis 90 % einer mit einem Reinigungs- oder Kiarspülmittel in konzentrierter oder verdünnter Form behandelten Oberfläche getrocknet ist.

Im Rahmen der vorliegenden Erfindung sind ungesättigte Carbonsäuren der Formel I als Monomer bevorzugt,

$$R^1(R^2)C{=}C(R^3)COOH \qquad (I),$$

in der $R^1$ bis $R^3$ unabhängig voneinander für -H -$CH_3$, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -$NH_2$, -OH oder -COOH substituierte Alkyl- oder Alkenylreste wie vorstehend definiert oder für -COOH oder -$COOR^4$ steht, wobei $R^4$ ein gesättigter oder ungesättigter, geradkettigter oder verzweigter Kohlenwasserstoffrest mit 1 bis 12 Kohlenstoffatomen ist.

Unter den ungesättigten Carbonsäuren, die sich durch die Formel I beschreiben lassen, sind insbesondere Acrylsäure ($R^1 = R^2 = R^3 = H$), Methacrylsäure ($R^1 = R^2 = H$; $R^3 = CH_3$) und/oder Maleinsäure ($R^1 = COOH$; $R^2 = R^3 = H$) bevorzugt.

Bei den Sulfonsäuregruppen-haltigen Monomeren sind solche der Formel II bevorzugt,

$$R^5(R^6)C{=}C(R^7)\text{-}X\text{-}SO_3H \qquad (II),$$

in der $R^5$ bis $R^7$ unabhängig voneinander für -H -$CH_3$, einen geradkettigen oder verzweigten gesättigten Alkylrest mit 2 bis 12 Kohlenstoffatomen, einen geradkettigen öder verzweigten, ein- oder mehrfach ungesättigten Alkenylrest mit 2 bis 12 Kohlenstoffatomen, mit -$NH_2$, -OH oder -COOH substituierte Alkyl- oder Alkenylreste wie vorstehend definiert

oder für -COOH oder -$COOR^4$ steht, wobei $R^4$ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -$(CH_2)_n$- mit n = 0 bis 4, -COO-$(CH_2)_k$- mit k = 1 bis 6, -C(O)-NH-$C(CH_3)_2$- und -C(O)-NH-$CH(CH_2CH_3)$-.

Unter diesen Monomeren bevorzugt sind solche der Formeln IIa, IIb und/oder IIc,

$H_2C$=CH-X-$SO_3H$ (IIa),

$H_2C$=$C(CH_3)$-X-$SO_3H$ (IIb),

$HO_3S$-X-$(R^6)C$=$C(R^7)$-X-$SO_3H$ (IIc),

in denen $R^6$ und $R^7$ unabhängig voneinander ausgewählt sind aus -H, -$CH_3$, -$CH_2CH_3$, - $CH_2CH_2CH_3$, -$CH(CH_3)_2$ und X für eine optional vorhandene Spacergruppe steht, die ausgewählt ist aus -$(CH_2)_n$- mit n = 0 bis 4, -COO-$(CH_2)_k$- mit k = 1 bis 6, -C(O)-NH-$C(CH_3)_2$- und -C(O)-NH-$CH(CH_2CH_3)$-.

Besonders bevorzugte Sulfonsäuregruppen-haltige Monomere sind dabei 1-Acrylamido-1-propansulfonsäure (X = -C(O)NH-$CH(CH_2CH_3)$ in Formel IIa), 2-Acrylamido-2-propansulfonsäure (X = -C(O)NH-$C(CH_3)_2$ in Formel IIa), 2-Acrylamido-2-methyl-1-propansulfonsäure (X = -C(O)NH-$CH(CH_3)CH_2$- in Formel IIa), 2-Methacrylamido-2-methyl-1-propansulfonsäure (X = -C(O)NH-$CH(CH_3)CH_2$- in Formel llb), 3-Methacrylamido-2-hydroxy-propansulfonsäure (X = -C (O)NH-$CH_2CH(OH)CH_2$- in Formel llb), Allylsulfonsäure (X = $CH_2$ in Formel lla), Methallylsulfonsäure (X = $CH_2$ in Formel llb), Allyloxybenzolsulfonsäure (X = -$CH_2$-O-$C_6H_4$- in Formel lla), Methallyloxybenzolsulfonsäure (X = -$CH_2$-O-$C_6H_4$- in Formel llb), 2-Hydroxy-3-(2-propenyloxy)propansulfonsäure, 2-Methyl-2-propen1 -sulfonsäure (X = $CH_2$ in Formel llb), Styrolsulfonsäure (X = $C_6H_4$ in Formel lla), Vinylsulfonsäure (X nicht vorhanden in Formel lla), 3-Sulfopropylacrylat (X = -C(O)NH-$CH_2CH_2CH_2$- in Formel lla), 3-Sulfopropylmethacrylat (X = -C(O)NH-$CH_2CH_2CH_2$- in Formel llb), Sulfomethacrylamid (X = -C(O)NH- in Formel llb), Sulfomethylmethacrylamid (X = -C(O)NH-$CH_2$- in Formel llb) sowie wasserlösliche Salze der genannten Säuren.

Als weitere ionische oder nichtionogene Monomere kommen insbesondere ethylenisch ungesättigte Verbindungen in Betracht. Vorzugsweise beträgt der Gehalt der eingesetzten Polymere an Monomeren der Gruppe iii) weniger als 20 Gew.-%, bezogen auf das Polymer. Besonders bevorzugt zu verwendende Polymere bestehen lediglich aus Monomeren der Gruppen i) und ii).

Zusammenfassend sind Copolymere aus

i) ungesättigten Carbonsäuren der Formel I.

$R^1(R^2)C$=$C(R^3)$COOH (I),

in der $R^1$ bis $R^3$ unabhängig voneinander für -H -$CH_3$, einen geradkettigen oder verzweigten gesättigten Alkylrest mit 2 bis 12 Kohlenstoffatomen, einen geradkettigen oder verzweigten, ein- oder mehrfach ungesättigten Alkenylrest mit 2 bis 12 Kohlenstoffatomen, mit -$NH_2$, -OH oder -COOH substituierte Alkyl- oder Alkenylreste wie vorstehend definiert oder für -COOH oder -$COOR^4$ steht, wobei $R^4$ ein gesättigter oder ungesättigter, geradkettigter oder verzweigter Kohlenwasserstoffrest mit 1 bis 12 Kohlenstoffatomen ist,

ii) Sulfonsäuregruppen-haltigen Monomeren der Formel II

$R^5(R^6)C$=$C(R^7)$-X-$SO_3H$ (II),

in der $R^5$ bis $R^7$ unabhängig voneinander für -H -$CH_3$, einen geradkettigen oder verzweigten gesättigten Alkylrest mit 2 bis 12 Kohlenstoffatomen, einen geradkettigen oder verzweigten, ein- oder mehrfach ungesättigtenAlkenylrest mit 2 bis 12 Kohlenstoffatomen, mit -$NH_2$, -OH oder -COOH substituierte Alkyl- oder Alkenylreste wie vorstehend definiert oder für -COOH oder -$COOR^4$ steht, wobei $R^4$ ein gesättigter oder ungesättigter, geradkettigter oder verzweigter Kohlenwasserstoffrest mit 1 bis 12 Kohlenstoffatomen ist, und X für eine optional vorhandene Spacergruppe steht, die ausgewählt ist aus -$(CH_2)_n$- mit n = 0 bis 4, -COO-$(CH_2)_k$- mit k = 1 bis 6, -C(O)-NH-$C(CH_3)_2$- und -C (O)-NH-$CH(CH_2CH_3)$-

iii) gegebenenfalls weiteren ionischen oder nichtionogenen Monomeren besonders bevorzugt.

Besonders bevorzugte Copolymere bestehen aus

i) einer oder mehrerer ungesättigter Carbonsäuren aus der Gruppe Acrylsäure, Methacrylsäure und/oder Maleinsäure

ii) einem oder mehreren Sulfonsäuregruppen-haltigen Monomeren der Formeln IIa, IIb und/oder IIc:

$H_2C=CH-X-SO_3H$ (IIa),

$H_2C=C(CH_3)-X-SO_3H$ (IIb),

$HO_3S-X-(R^6)C=C(R^7)-X-SO_3H$ (IIc),

in der $R^6$ und $R^7$ unabhängig voneinander ausgewählt sind aus -H, $-CH_3$, $-CH_2CH_3$, - $CH_2CH_2CH_3$, $-CH(CH_3)_2$ und X für eine optional vorhandene Spacergruppe steht, die ausgewählt ist aus $-(CH_2)_n-$ mit n = 0 bis 4, $-COO_-(CH_2)_k-$ mit k = 1 bis 6, $-C(O)-NH-C(CH_3)_2-$ und $-C(O)-NH-CH(CH_2CH_3)-$

iii) gegebenenfalls weiteren ionischen oder nichtionogenen Monomeren.

Die bevorzugt in den Mitteln enthaltenen Copolymere können die Monomere aus den Gruppen i) und ii) sowie gegebenenfalls iii) in variierenden Mengen enthalten, wobei sämtliche Vertreter aus der Gruppe i) mit sämtlichen Vertretem aus der Gruppe ii) und sämtlichen Vertretem aus der Gruppe iii) kombiniert werden können. Besonders bevorzugte Polymere weisen bestimmte Struktureinheiten auf, die nachfolgend beschrieben werden.

So sind beispielsweise erfindungsgemäß hergestellte Mittel bevorzugt, die dadurch gekennzeichnet sind, daß sie ein oder mehrere Copolymere enthalten, die Struktureinheiten der Formel III

$$-[CH_2-CHCOOH]_m-[CH_2-CHC(O)Y-SO_3H]_p- \quad \text{(III)},$$

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind.

Diese Polymere werden durch Copolymerisation von Acrylsäure mit einem Sulfonsäuregruppen-haltigen Acrylsäurederivat hergestellt. Copolymerisiert man das Sulfonsäuregruppen-haltige Acrylsäurederivat mit Methacrylsäure, gelangt man zu einem anderen Polymer, dessen Einsatz in den erfindungsgemäß hergestellten Mitteln ebenfalls bevorzugt und dadurch gekennzeichnet ist, daß die Mittel ein oder mehrere Copolymere enthalten, die Struktureinheiten der Formel IV

$$-[CH_2-C(CH_3)COOH]_m-[CH_2-CHC(O)-Y-SO_3H]_p- \quad \text{(IV)},$$

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind.

Völlig analog lassen sich Acrylsäure und/oder Methacrylsäure auch mit Sulfonsäuregruppen-haltigen Methacrylsäurederivaten copolymerisieren, wodurch die Struktureinheiten im Molekül verändert werden. So sind erfindungsgemäß hergestellte Mittel, die ein oder mehrere Copolymere enthalten, welche Struktureinheiten der Formel V

$$-[CH_2-CHCOOH]_m-[CH_2-C(CH_3)C(O)-Y-SO_3H]_p- \quad \text{(V)},$$

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind, ebenfalls eine bevorzugte Ausführungsform der vorliegenden Erfindung, genau wie auch Mittel bevorzugt sind, die dadurch gekennzeichnet sind, daß sie ein oder mehrere Copolymere enthalten, die Struktureinheiten der Formel VI

$$-[CH_2-C(CH_3)COOH]_m-[CH_2-C(CH_3)C(O)-Y-SO_3H]_p- \quad \text{(VII)},$$

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind.

Anstelle von Acrylsäure und/oder Methacrylsäure bzw. in Ergänzung hierzu kann auch Maleinsäure als besonders bevorzugtes Monomer aus der Gruppe i) eingesetzt werden. Man gelangt auf diese Weise zu bevorzugten erfindungsgemäß hergestellten Mitteln, die dadurch gekennzeichnet sind, daß sie ein oder mehrere Copolymere enthalten, die Struktureinheiten der Formel VII

$$-[HOOCCH\text{-}CHCOOH]_m\text{-}[CH_2\text{-}CHC(O)\text{-}Y\text{-}SO_3H]_p\text{-} \qquad (VII),$$

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind und zu Mitteln, welche dadurch gekennzeichnet sind, daß sie ein oder mehrere Copolymere enthalten, die Struktureinheiten der Formel VIII

$$-[HOOCCH\text{-}CHCOOH]_m[CH_2\text{-}C(CH_3)C(O)O\text{-}Y\text{-}SO_3H]_p\text{-} \qquad (VIII),$$

enthalten, in der m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind.

Zusammenfassend sind nach dem erfindungsgemäßen Verfahren hergestellte Reinigungsmittel bevorzugt, die als Inhaltsstoff b) ein oder mehrere Copolymere enthält, die Struktureinheiten der Formeln III und/oder IV und/oder V und/oder VI und/oder VII und/oder VIII

$$-[CH_2\text{-}CHCOOH]_m\text{-}[CH_2CHC(O)\text{-}Y\text{-}SO_3H]_p\text{-} \qquad (III),$$

$$-[CH_2\text{-}C(CH_3)COOH]_m\text{-}[CH_2CHC(O)\text{-}Y\text{-}SO_3H]_p\text{-} \qquad (IV),$$

$$-[CH_2\text{-}CHCOOH]_m\text{-}[CH_2\text{-}C(CH_3)C(O)\text{-}Y\text{-}SO_3H]_p\text{-} \qquad (V),$$

$$-[CH_2\text{-}C(CH_3)COOH]_m\text{-}[CH_2\text{-}C(CH_3)C(O)\text{-}Y\text{-}SO_3H]_p\text{-} \qquad (VI),$$

$$-[HOOCCH\text{-}CHCOOH]_m\text{-}[CH_2\text{-}CHC(O)\text{-}Y\text{-}SO_3H]_p\text{-} \qquad (VII),$$

$$-[HOOCCH\text{-}CHCOOH]_m\text{-}[CH_2\text{-}C(CH_3)C(O)O\text{-}Y\text{-}SO_3H]_p\text{-} \qquad (VIII),$$

enthalten, in denen m und p jeweils für eine ganze natürliche Zahl zwischen 1 und 2000 sowie Y für eine Spacergruppe steht, die ausgewählt ist aus substituierten oder unsubstituierten aliphatischen, aromatischen oder araliphatischen Kohlenwasserstoffresten mit 1 bis 24 Kohlenstoffatomen, wobei Spacergruppen, in denen Y für $-O-(CH_2)_n-$ mit n = 0 bis 4, für $-O-(C_6H_4)-$, für $-NH-C(CH_3)_2-$ oder $-NH-CH(CH_2CH_3)-$ steht, bevorzugt sind.

In den Polymeren können die Sulfonsäuregruppen ganz oder teilweise in neutralisierter Form vorliegen, d.h. daß das acide Wasserstoffatom der Sulfonsäuregruppe in einigen oder allen Sulfonsäuregruppen gegen Metallionen, vorzugsweise Alkalimetallionen und insbesondere gegen Natriumionen, ausgetauscht sein kann. Entsprechende Mittel, die dadurch gekennzeichnet sind, daß die Sulfonsäuregruppen im Copolymer teil- oder vollneutralisiert vorliegen, sind erfindungsgemäß bevorzugt.

Die Monomerenverteilung der in den bevorzugten Mitteln eingesetzten Copolymeren beträgt bei Copolymeren, die nur Monomere aus den Gruppen i) und ii) enthalten, vorzugsweise jeweils 5 bis 95 Gew.-% i) bzw. ii), besonders bevorzugt 50 bis 90 Gew.-% Monomer aus der Gruppe i) und 10 bis 50 Gew.-% Monomer aus der Gruppe ii), jeweils bezogen auf das Polymer.

Bei Terpolymeren sind solche besonders bevorzugt, die 20 bis 85 Gew.-% Monomer aus der Gruppe i), 10 bis 60 Gew.-% Monomer aus der Gruppe ii) sowie 5 bis 30 Gew.-% Monomer aus der Gruppe iii) enthalten.

Die Molmasse der in den bevorzugten Mitteln eingesetzten Polymere kann variiert werden, um die Eigenschaften der Polymere dem gewünschten Verwendungszweck anzupassen. Bevorzugte Wasch- und/oder Reinigungsmittel sind dadurch gekennzeichnet, daß die Copolymere Molmassen von 2000 bis 200.000 $gmol^{-1}$, vorzugsweise von 4000 bis 25.000 $gmol^{-1}$ und insbesondere von 5000 bis 15.000 $gmol^{-1}$ aufweisen.

Der Gehalt an einem oder mehreren Copolymeren in den nach dem erfindungsgemäßen Verfahren hergestellten bevorzugten Mitteln kann je nach Anwendungszweck und gewünschter Produktleistung variieren, wobei bevorzugte

erfindungsgemäß hergestellte Wasch- und/oder Reinigungsmittel, wie beispielsweise maschinelle Geschirrspülmittel, dadurch gekennzeichnet sind, daß sie das bzw. die Copolymer(e) in Mengen von 0,25 bis 50 Gew.-%, vorzugsweise von 0,5 bis 35 Gew.-%, besonders bevorzugt von 0,75 bis 20 Gew.-% und insbesondere von 1 bis 15 Gew.-% enthalten.

Wie bereits weiter oben erwähnt, werden in den erfindungsgemäß hergestellten Mitteln besonders bevorzugt sowohl Polyacrylate als auch die vorstehend beschriebenen Copolymere aus ungesättigten Carbonsäuren, Sulfonsäuregruppen-haltigen Monomeren sowie gegebenenfalls weiteren ionischen oder nichtionogenen Monomeren eingesetzt.

Die Polyacrylate wurden dabei weiter oben ausführlich beschrieben. Besonders bevorzugt sind Kombinationen aus den vorstehend beschriebenen Sulfonsäuregruppen-haltigen Copolymeren mit Polyacrylaten niedriger Molmasse, beispielsweise im Bereich zwischen 1000 und 4000 Dalton. Solche Polyacrylate sind kommerziell unter dem Handelsnamen Sokalan® PA15 bzw. Sokalan® PA25 (BASF) erhältlich.

Geeignet sind weiterhin copolymere Polycarboxylate, insbesondere solche der Acrylsäure mit Methacrylsäure und der Acrylsäure oder Methacrylsäure mit Maleinsäure. Als besonders geeignet haben sich Copolymere der Acrylsäure mit Maleinsäure erwiesen, die 50 bis 90 Gew.-% Acrylsäure und 50 bis 10 Gew.-% Maleinsäure enthalten. Ihre relative Molekülmasse, bezogen auf freie Säuren, beträgt im allgemeinen 2000 bis 100000 g/mol, vorzugsweise 20000 bis 90000 g/mol und insbesondere 30000 bis 80000 g/mol.

Die (co-)polymeren Polycarboxylate können entweder als Pulver oder als wäßrige Lösung eingesetzt werden. Der Gehalt der Mittel an (co-)polymeren Polycarboxylaten beträgt vorzugsweise 0,5 bis 20 Gew.-%, insbesondere 3 bis 10 Gew.-%.

Zur Verbesserung der Wasserlöslichkeit können die Polymere auch Allylsulfonsäuren, wie beispielsweise Allyloxybenzolsulfonsäure und Methallylsulfonsäure, als Monomer enthalten.

Insbesondere bevorzugt sind auch biologisch abbaubare Polymere aus mehr als zwei verschiedenen Monomereinheiten, beispielsweise solche, die als Monomere Salze der Acrylsäure und der Maleinsäure sowie Vinylalkohol bzw. Vinylalkohol-Derivate oder die als Monomere Salze der Acrylsäure und der 2-Alkylallylsulfonsäure sowie Zucker-Derivate enthalten.

Weitere bevorzugte Copolymere weisen als Monomere vorzugsweise Acrolein und Acrylsäure/Acrylsäuresalze bzw. Acrolein und Vinylacetat auf.

Ebenso sind als weitere bevorzugte Buildersubstanzen polymere Aminodicarbonsäuren, deren Salze oder deren Vorläufersubstanzen zu nennen. Besonders bevorzugt sind Polyasparaginsäuren bzw. deren Salze und Derivate.

Weitere geeignete Buildersubstanzen sind Polyacetale, welche durch Umsetzung von Dialdehyden mit Polyolcarbonsäuren, welche 5 bis 7 C-Atome und mindestens 3 Hydroxylgruppen aufweisen, erhalten werden können. Bevorzugte Polyacetale werden aus Dialdehyden wie Glyoxal, Glutaraldehyd, Terephthalaldehyd sowie deren Gemischen und aus Polyolcarbonsäuren wie Gluconsäure und/oder Glucoheptonsäure erhalten.

Weitere geeignete organische Buildersubstanzen sind Dextrine, beispielsweise Oligomere bzw. Polymere von Kohlenhydraten, die durch partielle Hydrolyse von Stärken erhalten werden können. Die Hydrolyse kann nach üblichen, beispielsweise säure- oder enzymkatalysierten Verfahren durchgeführt werden. Vorzugsweise handelt es sich um Hydrolyseprodukte mit mittleren Molmassen im Bereich von 400 bis 500000 g/mol. Dabei ist ein Polysaccharid mit einem Dextrose-Äquivalent (DE) im Bereich von 0,5 bis 40, insbesondere von 2 bis 30 bevorzugt, wobei DE ein gebräuchliches Maß für die reduzierende Wirkung eines Polysaccharids im Vergleich zu Dextrose, welche ein DE von 100 besitzt, ist. Brauchbar sind sowohl Maltodextrine mit einem DE zwischen 3 und 20 und Trockenglucosesirupe mit einem DE zwischen 20 und 37 als auch sogenannte Gelbdextrine und Weißdextrine mit höheren Molmassen im Bereich von 2000 bis 30000 g/mol.

Bei den oxidierten Derivaten derartiger Dextrine handelt es sich um deren Umsetzungsprodukte mit Oxidationsmitteln, welche in der Lage sind, mindestens eine Alkoholfunktion des Saccharidrings zur Carbonsäurefunktion zu oxidieren. Ein an $C_6$ des Saccharidrings oxidiertes Produkt kann besonders vorteilhaft sein.

Auch Oxydisuccinate und andere Derivate von Disuccinaten, vorzugsweise Ethylendiamindisuccinat, sind weitere geeignete Cobuilder. Dabei wird Ethylendiamin-N,N'-disuccinat (EDDS) bevorzugt in Form seiner Natrium- oder Magnesiumsalze verwendet. Weiterhin bevorzugt sind in diesem Zusammenhang auch Glycerindisuccinate und Glycerintrisuccinate. Geeignete Einsatzmengen liegen in zeolithhaltigen und/oder silicathaltigen Formulierungen bei 3 bis 15 Gew.-%.

Weitere brauchbare organische Cobuilder sind beispielsweise acetylierte Hydroxycarbonsäuren bzw. deren Salze, welche gegebenenfalls auch in Lactonform vorliegen können und welche mindestens 4 Kohlenstoffatome und mindestens eine Hydroxygruppe sowie maximal zwei Säuregruppen enthalten.

Eine weitere Substanzklasse mit Cobuildereigenschaften stellen die Phosphonate dar. Dabei handelt es sich insbesondere um Hydroxyalkan- bzw. Aminoalkanphosphonate. Unter den Hydroxyalkanphosphonaten ist das 1-Hydroxyethan-1,1-diphosphonat (HEDP) von besonderer Bedeutung als Cobuilder. Es wird vorzugsweise als Natriumsalz eingesetzt, wobei das Dinatriumsalz neutral und das Tetranatriumsalz alkalisch (pH 9) reagiert. Als Aminoalkanphosphonate kommen vorzugsweise Ethylendiamintetramethylenphosphonat (EDTMP), Diethylentriaminpentamethylenphosphonat (DTPMP) sowie deren höhere Homologe in Frage. Sie werden vorzugsweise in Form der neutral reagierenden Natriumsalze, z. B. als Hexanatriumsalz der EDTMP bzw. als Hepta- und Octa-Natriumsalz der DTPMP, eingesetzt. Als Builder wird dabei aus der Klasse der Phosphonate bevorzugt HEDP verwendet. Die Aminoalkanphosphonate besitzen zudem ein ausgeprägtes Schwermetallbindevermögen. Dementsprechend kann es, insbesondere wenn die Mittel auch Bleiche enthalten, bevorzugt sein, Aminoalkanphosphonate, insbesondere DTPMP, einzusetzen, oder Mischungen aus den genannten Phosphonaten zu verwenden.

Darüber hinaus können alle Verbindungen, die in der Lage sind, Komplexe mit Erdalkaliionen auszubilden, als Cobuilder eingesetzt werden.

Nach dem erfindungsgemäßen Verfahren bevorzugt hergestellte Mittel sind im Rahmen der vorliegenden Anmeldung dadurch gekennzeichnet, daß sie Gerüststoffe, vorzugsweise aus der Gruppe der Silikate, Carbonate, organische Cobuilder und/oder Phosphate in Mengen von 0,1 bis 99,5 Gew.-%, vorzugsweise von 1 bis 95 Gew.-%, besonders bevorzugt von 5 bis 90 Gew.-% und insbesondere von 10 bis 80 Gew.-%, jeweils bezogen auf das Mittel, enthalten.

**Tenside**

Bevorzugte Wasch- und/oder Reinigungsmittel enthalten im Rahmen der vorliegenden Anmeldung ein oder mehrere Tensid(e) aus den Gruppen der anionischen, nichtionischen, kationischen und/oder amphoteren Tenside.

Als anionische Tenside werden beispielsweise solche vom Typ der Sulfonate und Sulfate eingesetzt. Als Tenside vom Sulfonat-Typ kommen dabei vorzugsweise $C_{9-13}$- Alkylbenzolsulfonate, Olefinsulfonate, d.h. Gemische aus Alken- und Hydroxyalkansulfonaten sowie Disulfonaten, wie man sie beispielsweise aus $C_{12-18}$-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch Alkansulfonate, die aus $C_{12-18}$-Alkanen beispielsweise durch Sulfochlorierung oder Sulfoxidation mit anschließender Hydrolyse bzw. Neutralisation gewonnen werden. Ebenso sind auch die Ester von $\alpha$-Sulfofettsäuren (Estersulfonate), z.B. die $\alpha$-sulfonierten Methylester der hydrierten Kokos-, Palmkern- oder Talgfettsäuren geeignet.

Weitere geeignete Aniontenside sind sulfierte Fettsäureglycerinester. Unter Fettsäureglycerinestern sind die Mono-, Di- und Triester sowie deren Gemische zu verstehen, wie sie bei der Herstellung durch Veresterung von einem Monoglycerin mit 1 bis 3 Mol Fettsäure oder bei der Umesterung von Triglyceriden mit 0,3 bis 2 Mol Glycerin erhalten werden. Bevorzugte sulfierte Fettsäureglycerinester sind dabei die Sulfierprodukte von gesättigten Fettsäuren mit 6 bis 22 Kohlenstoffatomen, beispielsweise der Capronsäure, Caprylsäure, Caprinsäure, Myristinsäure, Laurinsäure, Palmitinsäure, Stearinsäure oder Behensäure.

Als Alk(en)ylsulfate werden die Alkali- und insbesondere die Natriumsalze der Schwefelsäurehalbester der $C_{12}$-$C_{18}$-Fettalkohole, beispielsweise aus Kokosfettalkohol, Talgfettalkohol, Lauryl-, Myristyl-, Cetyl- oder Stearylalkohol oder der $C_{10}$-$C_{20}$-Oxoalkohole und diejenigen Halbester sekundärer Alkohole dieser Kettenlängen bevorzugt. Weiterhin bevorzugt sind Alk(en)ylsulfate der genannten Kettenlänge, welche einen synthetischen, auf petrochemischer Basis hergestellten geradkettigen Alkylrest enthalten, die ein analoges Abbauverhalten besitzen wie die adäquaten Verbindungen auf der Basis von fettchemischen Rohstoffen. Aus waschtechnischem Interesse sind die $C_{12}$-$C_{16}$-Alkylsulfate und $C_{12}$-$C_{15}$-Alkylsulfate sowie $C_{14}$-$C_{15}$-Alkylsulfate bevorzugt. Auch 2,3-Alkylsulfate, welche als Handelsprodukte der Shell Oil Company unter dem Namen DAN® erhalten werden können, sind geeignete Aniontenside.

Auch die Schwefelsäuremonoester der mit 1 bis 6 Mol Ethylenoxid ethoxylierten geradkettigen oder verzweigten $C_{7-21}$-Alkohole, wie 2-Methyl-verzweigte $C_{9-11}$-Alkohole mit im Durchschnitt 3,5 Mol Ethylenoxid (EO) oder $C_{12-18}$-Fettalkohole mit 1 bis 4 EO, sind geeignet. Sie werden in Reinigungsmitteln aufgrund ihres hohen Schaumverhaltens nur in relativ geringen Mengen, beispielsweise in Mengen von 1 bis 5 Gew.-%, eingesetzt.

Weitere geeignete Aniontenside sind auch die Salze der Alkylsulfobernsteinsäure, die auch als Sulfosuccinate oder als Sulfobernsteinsäureester bezeichnet werden und die Monoester und/oder Diester der Sulfobemsteinsäure mit Alkoholen, vorzugsweise Fettalkoholen und insbesondere ethoxylierten Fettalkoholen darstellen. Bevorzugte Sulfosuccinate enthalten $C_{8-18}$-Fettalkoholreste oder Mischungen aus diesen. Insbesondere bevorzugte Sulfosuccinate enthalten einen Fettalkoholrest, der sich von ethoxylierten Fettalkoholen ableitet, die für sich betrachtet nichtionische Tenside darstellen (Beschreibung siehe unten). Dabei sind wiederum Sulfosuccinate, deren Fettalkohol-Reste sich von ethoxylierten Fettalkoholen mit eingeengter Homologenverteilung ableiten, besonders bevorzugt. Ebenso ist es auch möglich, Alk(en)ylbernsteinsäure mit vorzugsweise 8 bis 18 Kohlenstoffatomen in der Alk(en)ylkette oder deren Salze einzusetzen.

Als weitere anionische Tenside kommen insbesondere Seifen in Betracht. Geeignet sind gesättigte Fettsäureseifen, wie die Salze der Laurinsäure, Myristinsäure, Palmitinsäure, Stearinsäure, hydrierte Erucasäure und Behensäure sowie insbesondere aus natürlichen Fettsäuren, z.B. Kokos-, Palmkern- oder Talgfettsäuren, abgeleitete Seifengemische.

Die anionischen Tenside einschließlich der Seifen können in Form ihrer Natrium-, Kalium- oder Ammoniumsalze sowie als lösliche Salze organischer Basen, wie Mono-, Di- oder Triethanolamin, vorliegen. Vorzugsweise liegen die anionischen Tenside in Form ihrer Natrium- oder Kaliumsalze, insbesondere in Form der Natriumsalze vor.

Eine weitere Gruppe der waschaktiven Substanzen sind die nichtionischen Tenside. Als nichtionische Tenside

werden vorzugsweise alkoxylierte, vorteilhafterweise ethoxylierte, insbesondere primäre Alkohole mit vorzugsweise 8 bis 18 C-Atomen und durchschnittlich 1 bis 12 Mol Ethylenoxid (EO) pro Mol Alkohol eingesetzt, in denen der Alkoholrest linear oder bevorzugt in 2-Stellung methylverzweigt sein kann bzw. lineare und methylverzweigte Reste im Gemisch enthalten kann, so wie sie üblicherweise in Oxoalkoholresten vorliegen. Insbesondere sind jedoch Alkoholethoxylate mit linearen Resten aus Alkoholen nativen Ursprungs mit 12 bis 18 C-Atomen, z.B. aus Kokos-, Palm-, Talgfett- oder Oleylalkohol, und durchschnittlich 2 bis 8 EO pro Mol Alkohol bevorzugt. Zu den bevorzugten ethoxylierten Alkoholen gehören beispielsweise $C_{12-14}$-Alkohole mit 3 EO oder 4 EO, $C_{9-11}$-Alkohol mit 7 EO, $C_{13-15}$-Alkohole mit 3 EO, 5 EO, 7 EO oder 8 EO, $C_{12-18}$-Alkohole mit 3 EO, 5 EO oder 7 EO und Mischungen aus diesen, wie Mischungen aus $C_{12-14}$-Alkohol mit 3 EO und $C_{12-18}$-Alkohol mit 5 EO. Die angegebenen Ethoxylierungsgrade stellen statistische Mittelwerte dar, die für ein spezielles Produkt eine ganze oder eine gebrochene Zahl sein können. Bevorzugte Alkoholethoxylate weisen eine eingeengte Homologenverteilung auf (narrow range ethoxylates, NRE). Zusätzlich zu diesen nichtionischen Tensiden können auch Fettalkohole mit mehr als 12 EO eingesetzt werden. Beispiele hierfür sind Talgfettalkohol mit 14 EO, 25 EO, 30 EO oder 40 EO.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette, insbesondere Fettsäuremethylester.

Eine weitere Klasse von nichtionischen Tensiden, die vorteilhaft eingesetzt werden kann, sind die Alkylpolyglycoside (APG). Einsetzbare Alkypolyglycoside genügen der allgemeinen Formel $RO(G)_z$, in der R für einen linearen oder verzweigten, insbesondere in 2-Stellung methylverzweigten, gesättigten oder ungesättigten, aliphatischen Rest mit 8 bis 22, vorzugsweise 12 bis 18 C-Atomen bedeutet und G das Symbol ist, das für eine Glykoseeinheit mit 5 oder 6 C-Atomen, vorzugsweise für Glucose, steht. Der Glycosidierungsgrad z liegt dabei zwischen 1,0 und 4,0, vorzugsweise zwischen 1,0 und 2,0 und insbesondere zwischen 1,1 und 1,4. Bevorzugt eingesetzt werden lineare Alkylpolyglucoside, also Alkylpolyglycoside, die aus einem Glucoserest und einer n-Alkylkette bestehen.

Eine weitere Klasse bevorzugt eingesetzter nichtionischer Tenside, die entweder als alleiniges nichtionisches Tensid oder in Kombination mit anderen nichtionischen Tensiden eingesetzt werden, sind alkoxylierte, vorzugsweise ethoxylierte oder ethoxylierte und propoxylierte Fettsäurealkylester, vorzugsweise mit 1 bis 4 Kohlenstoffatomen in der Alkylkette.

Auch nichtionische Tenside vom Typ der Aminoxide, beispielsweise N-Kokosalkyl-N,N-dimethylaminoxid und N-Talgalkyl-N,N-dihydroxyethylaminoxid, und der Fettsäurealkanolamide können geeignet sein. Die Menge dieser nichtionischen Tenside beträgt vorzugsweise nicht mehr als die der ethoxylierten Fettalkohole, insbesondere nicht mehr als die Hälfte davon.

Weitere geeignete Tenside sind Polyhydroxyfettsäureamide der Formel (IX),

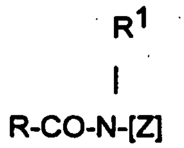

(IX)

in der RCO für einen aliphatischen Acylrest mit 6 bis 22 Kohlenstoffatomen, $R^1$ für Wasserstoff, einen Alkyl- oder Hydroxyalkylrest mit 1 bis 4 Kohlenstoffatomen und [Z] für einen linearen oder verzweigten Polyhydroxyalkylrest mit 3 bis 10 Kohlenstoffatomen und 3 bis 10 Hydroxylgruppen steht. Bei den Polyhydroxyfettsäureamiden handelt es sich um bekannte Stoffe, die üblicherweise durch reduktive Aminierung eines reduzierenden Zuckers mit Ammoniak, einem Alkylamin oder einem Alkanolamin und nachfolgende Acylierung mit einer Fettsäure, einem Fettsäurealkylester oder einem Fettsäurechlorid erhalten werden können.

Zur Gruppe der Polyhydroxyfettsäureamide gehören auch Verbindungen der Formel (X),

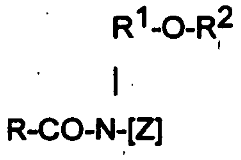

(X)

in der R für einen linearen oder verzweigten Alkyl- oder Alkenylrest mit 7 bis 12 Köhlenstoffatomen, $R^1$ für einen linearen,

verzweigten oder cyclischen Alkylrest oder einen Arylrest mit 2 bis 8 Kohlenstoffatomen und $R^2$ für einen linearen, verzweigten oder cyclischen Alkylrest oder einen Arylrest oder einen Oxy-Alkylrest mit 1 bis 8 Kohlenstoffatomen steht, wobei $C_{1-4}$-Alkyl- oder Phenylreste bevorzugt sind und [Z] für einen linearen Polyhydroxyalkylrest steht, dessen Alkylkette mit mindestens zwei Hydroxylgruppen substituiert ist, oder alkoxylierte, vorzugsweise ethoxylierte oder Propxylierte Derivate dieses Restes.

[Z] wird vorzugsweise durch reduktive Aminierung eines reduzierten Zuckers erhalten, beispielsweise Glucose, Fructose, Maltose, Lactose, Galactose, Mannose oder Xylose. Die N-Alkoxy- oder N-Aryloxy-substituierten Verbindungen können dann durch Umsetzung mit Fettsäuremethylestem in Gegenwart eines Alkoxids als Katalysator in die gewünschten Polyhydroxyfettsäureamide überführt werden.

Bei Wasch- und Reinigungsmitteln für das maschinelle Geschirrspülen kommen als Tenside im allgemeinen alle Tenside in Frage. Bevorzugt sind für diesen Anwendungszweck aber die vorstehend beschriebenen nichtionischen Tenside und hier vor allem die schwachschäumenden nichtionischen Tenside. Besonders bevorzugt sind die alkoxylierten Alkohole, besonders die ethoxylierten und/oder propoxylierten Alkohole. Dabei versteht der Fachmann allgemein unter alkoxylierten Alkoholen die Reaktionsprodukte von Alkylenoxid, bevorzugt Ethylenoxid, mit Alkoholen, bevorzugt im Sinne der vorliegenden Erfindung die längerkettigen Alkohole ($C_{10}$ bis $C_{18}$, bevorzugt zwischen $C_{12}$ und $C_{16}$, wie z. B. $C_{11}$-, $C_{12}$-, $C_{13}$-, $C_{14}$-, $C_{15}$-, $C_{16}$- ,$C_{17}$- und $C_{18}$-Alkohole). In der Regel entstehen aus n Molen Ethylenoxid und einem Mol Alkohol, abhängig von den Reaktionsbedingungen ein komplexes Gemisch von Additionsprodukten unterschiedlichen Ethoxylierungsgrades. Eine weitere Ausführungsform besteht im Einsatz von Gemischen der Alkylenoxide bevorzugt des Gemisches von Ethylenoxid und Propylenoxid. Auch kann man gewünschtenfalls durch eine abschließende Veretherung mit kurzkettigen Alkylgruppen, wie bevorzugt der Butylgruppe, zur Substanzklasse der "verschlossenen" Alkoholethoxylaten gelangen, die ebenfalls im Sinne der Erfindung eingesetzt werden kann. Ganz besonders bevorzugt im Sinne der vorliegenden Erfindung sind dabei hochethoxylierte Fettalkohole oder deren Gemische mit endgruppenverschlossenen Fettalkoholethoxylaten.

Als besonders bevorzugte Niotenside haben sich im Rahmen der vorliegenden Erfindung schwachschäumende Niotenside erwiesen, welche alternierende Ethylenoxid- und Alkylenoxideinheiten aufweisen. Unter diesen sind wiederum Tenside mit EO-AO-EO-AO-Blöcken bevorzugt, wobei jeweils eine bis zehn EO- bzw. AO-Gruppen aneinander gebunden sind, bevor ein Block aus den jeweils anderen Gruppen folgt. Hier sind erfindungsgemäß hergestellte maschinelle Geschirrspülmittel bevorzugt, die als nichionische(s) Tensid(e) Tenside der allgemeinen Formel XI enthalten

$$R^1\text{-O-}(CH_2\text{-}CH_2\text{-O})_w\text{-}(CH_2\text{-}\underset{\displaystyle R^2}{\underset{|}{CH}}\text{-O})_x\text{-}(CH_2\text{-}CH_2\text{-O})_y\text{-}(CH_2\text{-}\underset{\displaystyle R^3}{\underset{|}{CH}}\text{-O})_z\text{-H} \qquad (XI)$$

in der $R^1$ für einen geradkettigen oder verzweigten, gesättigten oder ein- bzw. mehrfach ungesättigten $C_{6-24}$-Alkyl- oder -Alkenylrest steht; jede Gruppe $R^2$ bzw. $R^3$ unabhängig voneinander ausgewählt ist aus $-CH_3$; $-CH_2CH_3$, $-CH_2CH_2-CH_3$, $-CH(CH_3)_2$ und die Indizes w, x, y, z unabhängig voneinander für ganze Zahlen von 1 bis 6 stehen.

Die bevorzugten Niotenside der Formel XI lassen sich durch bekannte Methoden aus den entsprechenden Alkoholen $R^1$-OH und Ethylen- bzw. Alkylenoxid herstellen. Der Rest $R^1$ in der vorstehenden Formel 1 kann je nach Herkunft des Alkohols variieren. Werden native Quellen genutzt, weist der Rest $R^1$ eine gerade Anzahl von Kohlenstoffatomen auf und ist in der Regel unverzeigt, wobei die linearen Resten aus Alkoholen nativen Ursprungs mit 12 bis 18 C-Atomen, z.B. aus Kokos-, Palm-, Talgfett- oder Oleylalkohol, bevorzugt sind. Aus sysnthetischen Quellen zugängliche Alkohole sind beispielsweise die Guerbetalkohole oder in 2-Stellung methylverzweigte bzw. lineare und methylverzweigte Reste im Gemisch, so wie sie üblicherweise in Oxoalkoholresten vorliegen. Unabhängig von der Art des zur Herstellung der in den Mitteln enthaltenen Niotenside eingesetzten Alkohols sind erfindungsgemäß hergestellte Wasch- und Reinigungsmittel bevorzugt, bei denen $R^1$ in Formel 1 für einen Alkylrest mit 6 bis 24, vorzugsweise 8 bis 20, besonders bevorzugt 9 bis 15 und insbesondere 9 bis 11 Kohlenstoffatomen steht.

Als Alkylenoxideinheit, die alternierend zur Ethylenoxideinheit in den bevorzugten Niotensiden enthalten ist, kommt neben Propylenoxid insbesondere Butylenoxid in Betracht. Aber auch weitere Alkylenoxide, bei denen $R^2$ bzw. $R^3$ unabhängig voneinander ausgewählt sind aus $-CH_2CH_2-CH_3$ bzw. $-CH(CH_3)_2$ sind geeignet. Bevorzugte nach dem erfindungsgemäßen Verfahren hergestellte maschinelle Geschirrspülmittel sind dadurch gekennzeichnet, daß $R^2$ bzw. $R^3$ für einen Rest $-CH_3$, w und x unabhängig voneinander für Werte von 3 oder 4 und y und z unabhängig voneinander für Werte von 1 oder 2 stehen.

Zusammenfassend sind zum Einsatz in den nach dem erfindungsgemäßen Verfahren hergestellten Mitteln insbesondere nichtionische Tenside bevorzugt, die einen $C_{9-15}$-Alkylrest mit 1 bis 4 Ethylenoxideinheiten, gefolgt von

1 bis 4 Propylenoxideinheiten, gefolgt von1 bis 4 Ethylenoxideinheiten, gefolgt von1 bis 4 Propylenoxideinheiten aufweisen.

Als bevorzugte zusätzliche Tenside werden schwachschäumende nichtionische Tenside eingesetzt. Mit besonderem Vorzug enthalten die Wasch- und/oder Reinigungsmittel ein nichtionisches Tensid, das einen Schmelzpunkt oberhalb Raumtemperatur aufweist. Demzufolge sind bevorzugte Mittel dadurch gekennzeichnet, daß sie nichtionische (s) Tensid(e) mit einem Schmelzpunkt oberhalb von 20°C, vorzugsweise oberhalb von 25˚C, besonders bevorzugt zwischen 25 und 60°C und insbesondere zwischen 26,6 und 43,3°C, enthalten.

Geeignete zusätzlich zu den bevorzugt in den erfindungsgemäß hergestellten Mitteln enthaltenen nichtionischen Tenside, die Schmelz- bzw. Erweichungspunkte im genannten Temperaturbereich aufweisen, sind beispielsweise schwachschäumende nichtionische Tenside, die bei Raumtemperatur fest oder hochviskos sein können. Werden bei Raumtemperatur hochviskose Niotenside eingesetzt, so ist bevorzugt, daß diese eine Viskosität oberhalb von 20 Pas, vorzugsweise oberhalb von 35 Pas und insbesondere oberhalb 40 Pas aufweisen. Auch Niotenside, die bei Raumtemperatur wachsartige Konsistenz besitzen, sind bevorzugt.

Bevorzugt als bei Raumtemperatur feste einzusetzende Niotenside stammen aus den Gruppen der alkoxylierten Niotenside, insbesondere der ethoxylierten primären Alkohole und Mischungen dieser Tenside mit strukturell komplizierter aufgebauten Tensiden wie Polyoxypropylen/Polyoxyethylen/Polyoxypropylen (PO/EO/PO)-Tenside. Solche (PO/EO/PO)-Niotenside zeichnen sich darüber hinaus durch gute Schaumkontrolle aus.

In einer bevorzugten Ausführungsform der vorliegenden Erfindung ist das nichtionische Tensid mit einem Schmelzpunkt oberhalb Raumtemperatur ein ethoxyliertes Niotensid, das aus der Reaktion von einem Monohydroxyalkanol oder Alkylphenol mit 6 bis 20 C-Atomen mit vorzugsweise mindestens 12 Mol, besonders bevorzugt mindestens 15 Mol, insbesondere mindestens 20 Mol Ethylenoxid pro Mol Alkohol bzw. Alkylphenol hervorgegangen ist.

Ein besonders bevorzugtes bei Raumtemperatur festes, einzusetzendes Niotensid wird aus einem geradkettigen Fettalkohol mit 16 bis 20 Kohlenstoffatomen ($C_{16-20}$-Alkohol), vorzugsweise einem $C_{18}$-Alkohol und mindestens 12 Mol, vorzugsweise mindestens 15 Mol und insbesondere mindestens 20 Mol Ethylenoxid gewonnen. Hierunter sind die sogenannten "narrow range ethoxylates" (siehe oben) besonders bevorzugt.

Demnach enthalten besonders bevorzugte Mittel ethoxylierte(s) Niotensid(e), das/die aus $C_{6-20}$-Monohydroxyalkanolen oder $C_{6-20}$-Alkylphenolen oder $C_{16-20}$-Fettalkoholen und mehr als 12 Mol, vorzugsweise mehr als 15 Mol und insbesondere mehr als 20 Mol Ethylenoxid pro Mol Alkohol gewonnen wurde(n).

Das Niotensid besitzt vorzugsweise. zusätzlich Propylenoxideinheiten im Molekül. Vorzugsweise machen solche PO-Einheiten bis zu 25 Gew.-%, besonders bevorzugt bis zu 20 Gew.-% und insbesondere bis zu 15 Gew.-% der gesamten Molmasse des nichtionischen Tensids aus. Besonders bevorzugte nichtionische Tenside sind ethoxylierte Monohydroxyalkanole oder Alkylphenole, die zusätzlich Polyoxyethylen-Polyoxypropylen Blockcopolymereinheiten aufweisen. Der Alkohol- bzw. Alkylphenolteil solcher Niotensidmoleküle macht dabei vorzugsweise mehr als 30 Gew.-%, besonders bevorzugt mehr als 50 Gew.-% und insbesondere mehr als 70 Gew.-% der gesamten Molmasse solcher Niotenside aus. Bevorzugte nach dem erfindungsgemäßen Verfahren hergestellte maschinelle Geschirrspülmittel sind dadurch gekennzeichnet, daß sie ethoxylierte und propoxylierte Niotenside enthalten, bei denen die Propylenoxideinheiten im Molekül bis zu 25 Gew.-%, bevorzugt bis zu 20 Gew.-% und insbesondere bis zu 15 Gew.-% der gesamten Molmasse des nichtionischen Tensids ausmachen, enthalten.

Weitere besonders bevorzugt einzusetzende Niotenside mit Schmelzpunkten oberhalb Raumtemperatur enthalten 40 bis 70% eines Polyoxypropylen/Polyoxyethylen/Polyoxypropylen-Blockpolymerblends, der 75 Gew.-% eines umgekehrten Block-Copolymers von Polyoxyethylen und Polyoxypropylen mit 17 Mol Ethylenoxid und 44 Mol Propylenoxid und 25 Gew.-% eines Block-Copolymers von Polyoxyethylen und Polyoxypropylen, initiiert mit Trimethylolpropan und enthaltend 24 Mol Ethylenoxid und 99 Mol Propylenoxid pro Mol Trimethylolpropan.

Nichtionische Tenside, die mit besonderem Vorzug eingesetzt werden können, sind beispielsweise unter dem Namen Poly Tergent® SLF-18 von der Firma Olin Chemicals erhältlich.

Ein weiter bevorzugtes erfindungsgemäß hergestelltes maschinelles Geschirrspülmittel enthält nichtionische Tenside der Formel

$$R^1O[CH_2CH(CH_3)O]_x[CH_2CH_2O]_y[CH_2CH(OH)R^2],$$

in der $R^1$ für einen linearen oder verzweigten aliphatischen Kohlenwasserstoffrest mit 4 bis 18 Kohlenstoffatomen oder Mischungen hieraus steht, $R^2$ einen linearen oder verzweigten Kohlenwasserstoffrest mit 2 bis 26 Kohlenstoffatomen oder Mischungen hieraus bezeichnet und x für Werte zwischen 0,5 und 1,5 und y für einen Wert von mindestens 15 steht.

Weitere bevorzugt einsetzbare Niotenside sind die endgruppenverschlossenen Poly(oxyalkylierten) Niotenside der Formel

$$R^1O[CH_2CH(R^3)O]_x[CH_2]_kCH(OH[CH_2]_jOR^2$$

in der $R^1$ und $R^2$ für lineare oder verzweigte, gesättigte oder ungesättigte, aliphatische oder aromatische Kohlenwasserstoffreste mit 1 bis 30 Kohlenstoffatomen stehen, $R^3$ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen. Wenn der Wert $x \geq 2$ ist, kann jedes $R^3$ in der obenstehenden Formel unterschiedlich sein. $R^1$ und $R^2$ sind vorzugsweise lineare oder verzweigte, gesättigte oder ungesättigte, aliphatische oder aromatische Kohlenwasserstoffreste mit 6 bis 22 Kohlenstoffatomen, wobei Reste mit 8 bis 18 C-Atomen besonders bevorzugt sind. Für den Rest $R^3$ sind H, $-CH_3$ oder $-CH_2CH_3$ besonders bevorzugt. Besonders bevorzugte Werte für x liegen im Bereich von 1 bis 20, insbesondere von 6 bis 15.

Wie vorstehend beschrieben, kann jedes $R^3$ in der obenstehenden Formel unterschiedlich sein, falls $x \geq 2$ ist. Hierdurch kann die Alkylenoxideinheit in der eckigen Klammer variiert werden. Steht x beispielsweise für 3, kann der Rest $R^3$ ausgewählt werden, um Ethylenoxid- ($R^3$ = H) oder Propylenoxid- ($R^3 = CH_3$) Einheiten zu bilden, die in jedweder Reihenfolge aneinandergefügt sein können, beispielsweise (EO)(PO)(EO), (EO)(EO)(PO), (EO)(EO)(EO), (PO)(EO)(PO), (PO)(PO)(EO) und (PO)(PO)(PO). Der Wert 3 für x ist hierbei beispielhaft gewählt worden und kann durchaus größer sein, wobei die Variationsbreite mit steigenden x-Werten zunimmt und beispielsweise eine große Anzahl (EO)-Gruppen, kombiniert mit einer geringen Anzahl (PO)-Gruppen einschließt, oder umgekehrt.

Insbesondere bevorzugte endgruppenverschlossenen Poly(oxyalkylierte) Alkohole der obenstehenden Formel weisen Werte von k = 1 und j = 1 auf, so daß sich die vorstehende Formel zu

$$R^1O[CH_2CH(R^3)O]_xCH_2CH(OH)CH_2OR^2$$

vereinfacht. In der letztgenannten Formel sind $R^1$, $R^2$ und $R^3$ wie oben definiert und x steht für Zahlen von 1 bis 30, vorzugsweise von 1 bis 20 und insbesonders von 6 bis 18. Besonders bevorzugt sind Tenside, bei denen die Reste $R^1$ und $R^2$ 9 bis 14 C-Atome aufweisen, $R^3$ für H steht und x Werte von 6 bis 15 annimmt.

Faßt man die letztgenannten Aussagen zusammen, sind Wasch- und/oder Reinigungsmittel bevorzugt, die endgruppenverschlossenen Poly(oxyalkylierten) Niotenside der Formel

$$R^1O[CH_2CH(R^3)O]_x[CH_2]_kCH(OH)(CH_2]_jOR^2$$

enthalten, in der $R^1$ und $R^2$ für lineare oder verzweigte, gesättigte oder ungesättigte, aliphatische oder aromatische Kohlenwasserstoffreste mit 1 bis 30 Kohlenstoffatomen stehen, $R^3$ für H oder einen Methyl-, Ethyl-, n-Propyl-, iso-Propyl, n-Butyl-, 2-Butyl- oder 2-Methyl-2-Butylrest steht, x für Werte zwischen 1 und 30, k und j für Werte zwischen 1 und 12, vorzugsweise zwischen 1 und 5 stehen, wobei Tenside des Typs

$$R^1O[CH_2CH(R^3)O]_xCH_2CH(OH)CH_2OR^2$$

in denen x für Zahlen von 1 bis 30, vorzugsweise von 1 bis 20 und insbesondere von 6 bis 18 steht, besonders bevorzugt sind.

In Verbindung mit den genannten Tensiden können auch anionische, kationische und/oder amphotere Tenside eingesetzt werden, wobei diese wegen ihres Schaumverhaltens in maschinellen Geschirrspülmitteln nur untergeordnete Bedeutung besitzen und zumeist nur in Mengen unterhalb von 10 Gew.-%, meistens sogar unterhalb von 5 Gew.-%, beispielsweise von 0,01 bis 2,5 Gew.-%, jeweils bezogen auf das Mittel, eingesetzt werden. Die erfindungsgemäß hergestellten Mittel können somit als Tensidkomponente auch anionische, kationische und/oder amphotere Tenside enthalten.

Im Rahmen der vorliegenden Erfindung ist es bevorzugt, daß die Wasch- und/oder Reinigungsmittel Tensid(e), vorzugsweise nichtionische(s) Tensid(e), in Mengen von 0,5 bis 20 Gew.-%, vorzugsweise von 0,75 bis 15 Gew.-% und insbesondere von 1,0 bis 10 Gew.-%, jeweils bezogen auf das gesamte Mittel, enthalten, wobei sich diese Gewichtsanteile auf den Gehalt an Tensiden, vorzugsweise nichtionischen Tensiden, nach der Beaufschlagung durch tensidhaltige(s) Aktivsubstanzgemisch(e) beziehen.

**Bleichmittel**

Bleichmittel und Bleichkaktivatoren sind wichtige Bestandteile von Wasch- und Reinigungsmitteln und ein Wasch- und Reinigungsmittel kann im Rahmen der vorliegenden Erfindung ein oder mehrere Substanzen aus den genannten Gruppen enthalten. Unter den als Bleichmittel dienenden, in Wasser $H_2O_2$ liefernden Verbindungen hat das Natriumpercarbonat besondere Bedeutung. Weitere brauchbare Bleichmittel sind beispielsweise Natriumperborattetrahydrat und das Natriumperboratmonohydrat ,Peroxypyrophosphate, Citratperhydrate sowie $H_2O_2$ liefernde persaure Salze oder Persäuren, wie Perbenzoate, Peroxophthalate, Diperazelainsäure, Phthaloiminopersäure oder Diperdodecandisäure.

"Natriumpercarbonat" ist eine in unspezifischer Weise verwendete Bezeichnung für Natriumcarbonat-Peroxohydrate, welche streng genommen keine "Percarbonate" (also Salze der Perkohlensäure) sondem Wasserstoffperoxid-Addukte an Natriumcarbonat sind. Die Handelsware hat die durchschnittliche Zusammensetzung 2 $Na_2CO_3 \cdot 3\ H_2O_2$ und ist damit kein Peroxycarbonat. Natriumpercarbonat bildet ein weißes, wasserlösliches Pulver der Dichte 2,14 $gcm^{-3}$, das leicht in Natriumcarbonat und bleichend bzw. oxidierend wirkenden Sauerstoff zerfällt.

Natriumcarbonatperoxohydrat wurde erstmals 1899 durch Fällung mit Ethanol aus einer Lösung von Natriumcarbonat in Wasserstoffperoxid erhalten, aber irrtümlich als Peroxycarbonat angesehen. Erst 1909 wurde die Verbindung als Wasserstoffperoxid-Anlagerungsverbindung erkannt, dennoch hat die historische Bezeichnung "Natriumpercarbonat" sich in der Praxis durchgesetzt.

Die industrielle Herstellung von Natriumpercarbonat wird überwiegend durch Fällung aus wäßriger Lösung (sogenanntes Naßverfahren) hergestellt. Hierbei werden wäßrige Lösungen von Natriumcarbonat und Wasserstoffperoxid vereinigt und das Natriumpercarbonat durch Aussalzmittel (überwiegend Natriumchlorid), Kristallisierhilfsmittel (beispielsweise Polyphosphate, Polyacrylate) und Stabilisatoren (beispielsweise $Mg^{2+}$-lonen) gefällt. Das ausgefällte Salz, das noch 5 bis 12 Gew.-% Mutterlauge enthält, wird anschließend abzentrifugiert und in Fließbett-Trocknern bei 90°C getrocknet. Das Schüttgewicht des Fertigprodukts kann je nach Herstellungsprozeß zwischen 800 und 1200 g/l schwanken. In der Regel wird das Percarbonat durch ein zusätzliches Coating stabilisiert. Coatingverfahren und Stoffe, die zur Beschichtung eingesetzt werden, sind in der Patentliteratur breit beschrieben. Grundsätzlich können erfindungsgemäß hergestellte Mittel alle handelsüblichen-Percarbonattypen enthalten, wie sie beispielsweise von den Firmen Solvay Interox, Degussa, Kemira oder Akzo angeboten werden.

Reinigungsmittel für das maschinelle Geschirrspülen können auch Bleichmittel aus der Gruppe der organischen Bleichmittel enthalten. Typische organische Bleichmittel, die als Inhaltsstoffe im Rahmen der vorliegenden Erfindung eingesetzt werden können, sind die Diacylperoxide, wie z.B. Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind (a) die Peroxybenzoesäure und ihre ringsubstituierten Derivate, wie Alkylperoxybenzoesäuren, aber auch Peroxy-α-Naphtoesäure und Magnesium-monoperphthalat, (b) die aliphatischen oder substituiert aliphatischen Peroxysäuren, wie Peroxylaurinsäure, Peroxystearinsäure, ε-Phthalimidoperoxycapronsäure [Phthaloiminoperoxyhexansäure (PAP)], o-Carboxybenzamidoperoxycapronsäure, N-nonenylamidoperadipinsäure und N-nonenylamidopersuccinate, und (c) aliphatische und araliphatische Peroxydicarbonsäuren, wie 1,12-Diperoxycarbonsäure, 1,9-Diperoxyazelainsäure, Diperocysebacinsäure, Diperoxybrassylsäure, die Diperoxyphthalsäuren, 2-Decyldiperoxybutan-1,4-disäure, N,N-Terephthaloyl-di(6-aminopercapronsäue) können eingesetzt werden.

Als Bleichmittel für das maschinelle Geschirrspülen können gemäß der vorliegenden Erfindung auch Chlor oder Brom freisetzende Substanzen eingesetzt werden. Unter den geeigneten Chlor oder Brom freisetzenden Materialien kommen beispielsweise heterocyclische N-Brom- und N-Chloramide, beispielsweise Trichlorisocyanursäure, Tribromisocyanursäure, Dibromisocyanursäure und/oder Dichlorisocyanursäure (DICA) und/oder deren Salze mit Kationen wie Kalium and Natrium in Betracht. Hydantoinverbindungen, wie 1,3-Dichlor-5,5-dimethylhydanthoin sind ebenfalls geeignet.

Vorteilhafte Mittel im Rahmen der vorliegenden Erfindung enthalten ein oder mehrere Bleichmittel, vorzugsweise aus der Gruppe der Sauerstoff- oder Halogen-Bleichmittel, insbesondere der Chlorbleichmittel, unter besonderer Bevorzugung von Natriumpercarbonat und/oder Natriumperborat-Monohydrat, in Mengen von 0,5 bis 40 Gew.-%, vorzugsweise von 1 bis 30 Gew.-%, besonders bevorzugt von 2,5 bis 25 Gew.- % und insbesondere von 5 bis 20 Gew.-%, jeweils bezogen auf das gesamte Mittel.

**Bleichaktivatoren**

Um beim Reinigen bei Temperaturen von 60 °C und darunter eine verbesserte Bleichwirkung zu erreichen, können Reinigungsmittel im Rahmen der vorliegenden Erfindung Bleichaktivatoren enthalten. Als Bleichaktivatoren können Verbindungen, die unter Perhydrolysebedingungen aliphatische Peroxocarbonsäuren mit vorzugsweise 1 bis 10 C-Atomen, insbesondere 2 bis 4 C-Atomen, und/oder gegebenenfalls substituierte Perbenzoesäure ergeben, eingesetzt werden. Geeignet sind Substanzen, die O - und/oder N-Acylgruppen der genannten C-Atomzanl und/oder gegebenenfalls substituierte Benzoylgruppen tragen. Bevorzugt sind mehrfach acylierte Alkylendiamine, insbesondere Tetraacetylethylendiamin (TAED), acylierte Triazinderivate, insbesondere 1,5-Diacetyl-2,4-dioxohexahydro-1,3,5-triazin (DADHT), acylierte Glykolurile, insbesondere Tetraacetylglykoluril (TAGU), N-Acylimide, insbesondere N-Nonanoylsuccinimid (NOSI), acylierte Phenolsulfonate, insbesondere n-Nonanoyl- oder Isononanoyloxybenzolsulfonat (n- bzw. iso-NOBS), Carbonsäureanhydride, insbesondere Phthalsäureanhydrid, acylierte mehrwertige Alkohole, insbesondere Triacetin, Ethylenglykoldiacetat und 2,5-Diacetoxy-2,5-dihydrofuran.

Zusätzlich zu den konventionellen Bleichaktivatoren oder an deren Stelle können gemäß der vorliegenden Erfindung auch sogenannte Bleichkatalysatoren in die Reinigungsmittel eingearbeitet werden. Bei diesen Stoffen handelt es sich um bleichverstärkende Übergangsmetallsalze bzw. Übergangsmetallkomplexe wie beispielsweise Mn-, Fe-, Co-,

Ru - oder Mo-Salenkomplexe oder -carbonylkomplexe. Auch Mn-, Fe-, Co-, Ru-, Mo-, Ti-, V- und Cu-Komplexe mit N-haltigen Tripod-Liganden sowie Co-, Fe-, Cu- und Ru-Amminkomplexe sind als Bleichkatalysatoren verwendbar.

Bevorzugte erfindungsgemäß hergestellte Mittel enthalten einen oder mehrerer Stoffe aus der Gruppe der Bleichaktivatoren, insbesondere aus den Gruppen der mehrfach acylierten Alkylendiamine, insbesondere Tetraacetylethylendiamin (TAED), der N-Acylimide, insbesondere N-Nonanoylsuccinimid (NOSI), der acylierten Phenolsulfonate, insbesondere n-Nonanoyl- oder Isononanoyloxybenzolsulfonat (n- bzw. iso-NOBS) und n-Methyl-Morpholinium-Acetonitril-Methylsulfat (MMA), in Mengen von 0,1 bis 20 Gew.- %, vorzugsweise von 0,5 bis 15 Gew.-% und insbesondere von 1 bis 10 Gew.-%, jeweils bezogen auf das gesamte Mittel, enthalten.

Zu den im Rahmen der vorliegenden Erfindung bevorzugten Bleichaktivatoren gehören weiterhin die "Nitrilquats", kationische Nitrile der Formel (XII),

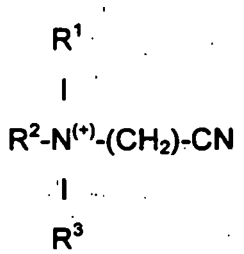

$X^{(-)}$ (XII),

in denen $R^1$ für -H, $-CH_3$, einen $C_{2-24}$-Alkyl- oder -Alkenylrest, einen substituierten $C_{2-24}$-Alkyl- oder -Alkenylrest mit mindestens einem Substituenten aus der Gruppe -Cl, -Br, -OH, $-NH_2$, -CN, einen Alkyl- oder Alkenylarylrest mit einer $C_{1-24}$-Alkylgruppe, oder für einen substituierten Alkyl- oder Alkenylarylrest mit einer $C_{1-24}$-Alkylgruppe und mindestens einem weiteren Substituenten am aromatischen Ring steht, $R^2$ und $R^3$ unabhängig voneinander ausgewählt sind aus $-CH_2-CN$, $-CH_3$, $-CH_2-CH_3$, $-CH_2-CH_2-CH_3$, $-CH(CH_3)-CH_3$, $-CH_2-OH$, $-CH_2-CH_2-OH$, $-CH(OH)-CH_3$, $-CH_2-CH_2-CH_2-OH$, $-CH_2-CH(OH)-CH_3$, $-CH(OH)-CH_2-CH_3$, $-(CH_2CH_2-0)_nH$ mit n = 1, 2, 3, 4, 5 oder 6 und X ein Anion ist.

Unter die allgemeine Formel (XII) fällt eine Vielzahl von kationischen Nitrilen, die im Rahmen der vorliegenden Erfindung einsetzbar sind. Mit besonderem Vorteil enthalten die erfindungsgemäß hergestellten Wasch- und Reinigungsmittelformkörper dabei kationische Nitrite, in denen R' für Methyl, Ethyl, Propyl, Isopropyl oder einen n-Butyl, n-Hexyl, n-Octyl, n-Decyl, n-Dodecyl, n-Tetradecyl, n-Hexadecyl oder n-Octadecylrest steht. $R^2$ und $R^3$ sind vorzugsweise ausgewählt aus Methyl, Ethyl, Propyl, Isopropyl und Hydroxyethyl, wobei einer oder beide Reste vorteilhaft auch noch ein Cyanomethylenrest sein kann.

Aus Gründen der leichteren Synthese sind Verbindungen bevorzugt, in denen die Reste $R^1$ bis $R^3$ identisch sind, beispielsweise $(CH_3)_3N^{(+)}CH_2-CN\ X^-$, $(CH_3CH_2)_3N^{(+)}H_2-CN\ X^-$, $(CH_3CH_2CH_2)_3N^{(+)}CH_2-CN\ X^-$, $(CH_3CH(CH_3))_3N^{(+)}CH_2-CN\ X^-$, oder $(HO-CH_2-CH_2)_3N^{(+)}CH_2-CN\ X^-$, wobei $X^-$ vorzugswiese für ein Anion steht, das aus der Gruppe Chlorid, Bromid, lodid, Hydrogensulfat, Methosulfat, p-Toluolsulfonat (Tosylat) oder Xylolsulfonat ausgewählt ist.

Im Rahmen der vorliegenden Erfindung bevorzugte Wasch- und Reinigungsmittel sind dadurch gekennzeichnet, daß sie das kationische Nitril der Formel (XII) in Mengen von 0,1 bis 20 Gew.-%, vorzugsweise von 0,25 bis 15 Gew.-% und insbesondere von 0,5 bis 10 Gew.-%, jeweils bezogen auf das Formkörpergewicht, enthalten.

**Enzyme**

Als Enzyme kommen insbesondere solche aus der Klassen der Hydrolasen wie der Proteasen, Esterasen, Lipasen bzw. lipolytisch wirkende Enzyme, Amylasen, Cellulasen bzw. andere Glykosylhydrolasen und Gemische der genannten Enzyme in Frage. Alle diese Hydrolasen tragen in der Wäsche zur Entfernung von Verfleckungen wie protein-, fett- oder stärkehaltigen Verfleckungen und Vergrauungen bei. Cellulasen und andere Glykosylhydrolasen können darüber hinaus durch das Entfernen von Pilling und Mikrofibrillen zur Farberhaltung und zur Erhöhung der Weichheit des Textils beitragen. Zur Bleiche bzw. zur Hemmung der Farbübertragung können auch Oxidoreduktasen eingesetzt werden. Besonders gut geeignet sind aus Bakterienstämmen oder Pilzen wie Bacillus subtilis, Bacillus licheniformis, Streptomyceus griseus, Coprinus Cinereus und Humicola insolens sowie aus deren gentechnisch modifizierten Varianten gewonnene enzymatische Wirkstoffe. Vorzugsweise werden Proteasen vom Subtilisin-Typ und insbesondere Proteasen, die aus Bacillus lentus gewonnen werden, eingesetzt. Dabei sind Enzymmischungen, beispielsweise aus Protease und Amylase oder Protease und Lipase bzw. lipolytisch wirkenden Enzymen oder Protease und Cellulase oder aus Cellulase und Lipase bzw. lipolytisch wirkenden Enzymen oder aus Protease, Amylase und Lipase bzw. lipolytisch wirkenden Enzymen oder Protease, Lipase bzw. lipolytisch wirkenden Enzymen und Cellulase, insbesondere jedoch Protease und/ oder Lipasehaltige Mischungen bzw. Mischungen mit lipolytisch wirkenden Enzymen von besonderem Interesse. Beispiele für derartige lipolytisch wirkende Enzyme sind die bekannten Cutinasen.

Auch Peroxidasen oder Oxidasen haben sich in einigen Fällen als geeignet erwiesen. Zu den geeigneten Amylasen zählen insbesondere alpha-Amylasen, Iso-Amylasen, Pullulanasen und Pektinasen. Als Cellulasen werden vorzugsweise Cellobiohydrolasen, Endoglucanasen und -Glucosidasen, die auch Cellobiasen genannt werden, bzw. Mischungen aus diesen eingesetzt. Da sich verschiedene Cellulase-Typen durch ihre CMCase- und Avicelase-Aktivitäten unterscheiden, können durch gezielte Mischungen der Cellulasen die gewünschten Aktivitäten eingestellt werden.

Die Enzyme können an Trägerstoffe adsorbiert oder in Hüllsubstanzen eingebettet sein, um sie gegen vorzeitige Zersetzung zu schützen. Bevorzugte erfindungsgemäß hergestellte Mittel enthalten Enzyme, vorzugsweise in Form flüssiger und/oder fester Enzymzubereitungen, in Mengen von 0,1 bis 10 Gew.%, vorzugsweise von 0,5 bis 8 Gew.-% und insbesondere von 1 bis 5 Gew.-%, jeweils bezogen auf das gesamte Mittel.

## Farbstoffe

Um den ästhetischen Eindruck der nach dem erfindungsgemäßen Verfahren hergestellten Wasch- und Reinigungsmittel zu verbessern, können sie mit geeigneten Farbstoffen eingefärbt werden. Im Rahmen der vorliegenden Erfindung bevorzugte Farbstoffe, deren Auswahl dem Fachmann keinerlei Schwierigkeit bereitet, besitzen eine hohe Lagerstabilität und Unempfindlichkeit gegenüber den übrigen Inhaltsstoffen der Mittel und gegen Licht sowie keine ausgeprägte Substantivität gegenüber Textilfasern, um diese nicht anzufärben.

Bevorzugt für den Einsatz in den erfindungsgemäß hergestellten Wasch- und Reinigungsmitteln sind alle Färbemittel, die im Waschprozeß oxidativ zerstört werden können sowie Mischungen derselben mit geeigneten blauen Farbstoffen, sog. Blautönem. Es hat sich als vorteilhaft erwiesen Färbemittel einzusetzen, die in Wasser oder bei Raumtemperatur in flüssigen organischen Substanzen löslich sind. Geeignet sind beispielsweise anionische Färbemittel, z.B. anionische Nitrosofarbstoffe. Ein mögliches Färbemittel ist beispielsweise Naphtholgrün (Colour Index (Cl) Teil 1: Acid Green 1; Teil 2: 10020), das als Handelsprodukt beispielsweise als Basacid® Grün 970 von der Fa. BASF, Ludwigshafen, erhältlich ist, sowie Mischungen dieser mit geeigneten blauen Farbstoffen. Als weitere Färbemittel kommen Pigmosol® Blau 6900 (Cl 74160), Pigmosol® Grün 8730 (Cl 74260), Basonyl® Rot 545 FL (Cl 45170), Sandolan® Rhodamin EB400 (Cl 45100), Basacid® Gelb 094 (Cl 47005), Sicovit® Patentblau 85 E 131 (Cl 42051), Acid Blue 183 (CAS 12217-22-0, Cl Acidblue 183), Pigment Blue 15 (Cl 74160), Supranol® Blau GLW (CAS 12219-32-8, Cl Acidblue 221)), Nylosan® Gelb N-7GL SGR (CAS 61814-57-1, Cl Acidyellow 218) und/oder Sandolan® Blau (Cl Acid Blue 182, CAS 12219-26-0) zum Einsatz.

Bei der Wahl des Färbemittels muß beachtet werden, daß die Färbemittel keine zu starke Affinität gegenüber den textilen Oberflächen und hier insbesondere gegenüber Kunstfasern aufweisen. Gleichzeitig ist auch bei der Wahl geeigneter Färbemittel zu berücksichtigen, daß Färbemittel unterschiedliche Stabilitäten gegenüber der Oxidation aufweisen. Im allgemeinen gilt, daß wasserunlösliche Färbemittel gegen Oxidation stabiler sind als wasserlösliche Färbemittel. Abhängig von der Löslichkeit und damit auch von der Oxidationsempfindlichkeit variiert die Konzentration des Färbemittels in den Wasch- oder Reinigungsmitteln. Bei gut wasserlöslichen Färbemitteln, z.B. dem oben genannten Basacid® Grün oder dem gleichfalls oben genannten Sandolan® Blau, werden typischerweise Färbemittel-Konzentrationen im Bereich von einigen $10^{-2}$ bis $10^{-3}$ Gew.-% gewählt. Bei den auf Grund ihrer Brillanz insbesondere bevorzugten, allerdings weniger gut wasserlöslichen Pigmentfarbstoffen, z.B. den oben genannten Pigmosol®-Farbstoffen, liegt die geeignete Konzentration des Färbemittels in Wasch- oder Reinigungsmitteln dagegen typischerweise bei einigen $10^{-3}$ bis $10^{-4}$ Gew.-%.

## Duftstoffe

Als Duftstoffe können im Rahmen der vorliegenden Erfindung einzelne Riechstoffverbindungen, z.B. die synthetischen Produkte vom Typ der Ester, Ether, Aldehyde, Ketone, Alkohole und Kohlenwasserstoffe verwendet werden. Riechstoffverbindungen vom Typ der Ester sind z.B. Benzylacetat, Phenoxyethylisobutyrat, p-tert.-Butylcyclohexylacetat, Linalylacetat, Dimethylbenzylcarbinylacetat, Phenylethylacetat, Linalylbenzoat, Benzylformiat, Ethylmethylphenylglycinat, Allylcyclohexylpropionat, Styrallylpropionat und Benzylsalicylat. Zu den Ethern zählen beispielsweise Benzylethylether, zu den Aldehyden z.B. die linearen Alkanale mit 8-18 C-Atomen, Citral, Citronellal, Citronellyloxyacetaldehyd, Cyclamenaldehyd, Hydroxycitronellal, Lilial und Bourgeonal, zu den Ketonen z.B. die Jonone, ∝-Isomethylionon und Methyl-cedrylketon, zu den Alkoholen Anethol, Citronellol, Eugenol, Geraniol, Linalool, Phenylethylalkohol und Terpineol, zu den Kohlenwasserstoffen gehören hauptsächlich die Terpene wie Limonen und Pinen. Bevorzugt werden jedoch Mischungen verschiedener Riechstoffe verwendet, die gemeinsam eine ansprechende Duftnote erzeugen. Solche Parfümöle können auch natürliche Riechstoffgemische enthalten, wie sie aus pflanzlichen Quellen zugänglich sind, z.B. Pine-, Citrus-, Jasmin-, Patchouly-, Rosen- oder Ylang-Ylang-Öl. Ebenfalls geeignet sind Muskateller, Salbeiöl, Kamillenöl, Nelkenöl, Melissenöl, Minzöl, Zimtblätteröi, Lindenblütenöl, Wacholderbeeröl, Vetiveröl, Olibanumöl, Galbanumöl und Labdanumöl sowie Orangenblütenöl, Neroliol, Orangenschalenöl und Sandelholzöl.

Die allgemeine Beschreibung der einsetzbaren Parfüme (siehe oben) stellt dabei allgemein die unterschiedlichen Substanzklassen von Riechstoffen dar. Um wahrnehmbar zu sein, muß ein Riechstoff flüchtig sein, wobei neben der Natur der funktionellen Gruppen und der Struktur der chemischen Verbindung auch die Molmasse eine wichtige Rolle spielt. So besitzen die meisten Riechstoffe Molmassen bis etwa 200 Dalton, während Molmassen von 300 Dalton und darüber eher eine Ausnahme darstellen. Auf Grund der unterschiedlichen Flüchtigkeit von Riechstoffen verändert sich der Geruch eines aus mehreren Riechstoffen zusammengesetzten Parfüms bzw. Duftstoffs während des Verdampfens, wobei man die Geruchseindrücke in "Kopfnote" (top note), "Herz- bzw. Mittelnote" (middle note bzw. body) sowie "Basisnote" (end note bzw. dry out) unterteilt. Da die Geruchswahrnehmung zu einem großen Teil auch auf der Geruchsintensität beruht, besteht die Kopfnote eines Parfüms bzw. Duftstoffs nicht allein aus leichtflüchtigen Verbindungen, während die Basisnote zum größten Teil aus weniger flüchtigen, d.h. haftfesten Riechstoffen besteht. Bei der Komposition von Parfüms können leichter flüchtige Riechstoffe beispielsweise an bestimmte Fixative gebunden werden, wodurch ihr zu schnelles Verdampfen verhindert wird. Bei der nachfolgenden Einteilung der Riechstoffe in "leichter flüchtige" bzw. "haftfeste" Riechstoffe ist also über den Geruchseindruck und darüber, ob der entsprechende Riechstoff als Kopf- oder Herznote wahrgenommen wird, nichts ausgesagt.

Durch eine geeignete Auswahl der genannten Duftstoffe bzw. Parfümöle kann auf diese Weise für erfindungsgemäße Mittel sowohl der Produktgeruch, sowie, nach Beendigung des Reinigungs- und Pflegevorgangs, zusätzlich beispielsweise der Wäscheduft beeinflußt werden. Für den letzteren Geruchseindruck ist die Verwendung haftfesterer Riechstoffe vorteilhaft, während zur Produktbeduftung auch leichterflüchtige Riechstoffe einsetzbar sind. Haftfeste Riechstoffe, die im Rahmen der vorliegenden Erfindung einsetzbar sind, sind beispielsweise die ätherischen Öle wie Angelikawurzelöl, Anisöl, Amikablütenöl, Basilikumöl, Bayöl, Bergamottöl, Champacablütenöl, Edeltannenöl, Edeltannenzapfenöl, Elemiöl, Eukalyptusöl, Fenchelöl, Fichtennandelöl, Galbanumöl, Geraniumöl, Gingergrasöl, Guajakholzöl, Gurjunbalsamöl, Helichrysumöl, Ho-Öl, Ingweröl, Irisöl, Kajeputöl, Kalmusöl, Kamillenöl, Kampferöl, Kanagaöl, Kardamomenöl, Kassiaöl, Kiefernnadelöl, Kopaivabalsamöl, Korianderöl, Krauseminzeöl, Kümmelöl, Kuminöl, Lavendelöl, Lemongrasöl, Limetteöl, Mandarinenöl, Melissenöl, Moschuskömeröl, Myrrhenöl, Nelkenöl, Neroliöl, Niaouliöl, Olibanumöl, Orangenöl, Origanumöl, Palmarosaöl, Patschuliöl, Perubalsamöl, Petitgrainöl, Pfefferöl, Pfefferminzöl, Pimentöl, Pine-Öl, Rosenöl, Rosmarinöl; Sandelholzöl, Sellerieöl, Spiköl, Stemanisöl, Terpentinöl, Thujaöl, Thymianöl, Verbenaöl, Vetiveröl, Wacholderbeeröl, Wermutöl, Wintergrünöl, Ylang-Ylang-Öl, Ysop-Öl, Zimtöl, Zimtblätteröl, Zitronellöl, Zitronenöl sowie Zypressenöl. Aber auch die höhersiedenden bzw. festen Riechstoffe natürlichen oder synthetischen Ursprungs können im Rahmen der vorliegenden Erfindung als haftfeste Riechstoffe bzw. Riechstoffgemische, also Duftstoffe, eingesetzt werden. Zu diesen Verbindungen zählen die nachfolgend genannten Verbindungen sowie Mischungen aus diesen: Ambrettolid, α-Amylzimtaldehyd, Anethol, Anisaldehyd, Anisalkohol, Anisöl, Anthranilsäuremethylester, Acetophenon, Benzylaceton, Benzaldehyd, Benzoesäureethylester, Benzophenon, Benzylalkohol, Benzylacetat, Benzylbenzoat, Benzylformiat, Benzylvalerianat, Borneol, Bornylacetat, α-Bromstyrol, n-Decylaldehyd, n-Dodecylaldehyd, Eugenol, Eugenolmethylether, Eukalyptol, Farnesol, Fenchon, Fenchylacetat, Geranylacetat, Geranylformiat, Heliotropin, Heptincarbonsäuremethylester, Heptaldehyd, Hydrochinon-Dimethylether, Hydroxyzimtaldehyd, Hydroxyzimtalkohol, Indol, Iron, Isoeugenol, Isoeugenolmethylether, Isosafrol, Jasmon, Kampfer, Karvakrol, Karvon, p-Kresolmethylether, Cumarin, p-Methoxyacetophenon, Methyl-n-amylketon, Methylanthranilsäuremethylester, p-Methylacetophenon, Methylchavikol, p-Methylchinolin, Methyl-β-naphthylketon, Methyl-n-nonylacetaldehyd, Methyl-n-nonylketon, Muskon, β-Naphtholethylether, β-Naphtholmethylether, Nerol, Nitrobenzol, n-Nonylaldehyd, Nonylakohol, n-Octylaldehyd, p-Oxy-Acetophenon, Pentadekanolid, β-Phenylethylalkohol, Phenylacetaldehyd-Dimethyacetal, Phenylessigsäure, Pulegon, Safrol, Salicylsäureisoamylester, Salicylsäuremethylester, Salicylsäurehexylester, Salicylsäurecyclohexylester, Santalol, Skatol, Terpineol, Thymen, Thymol, γ-Undelacton, Vanilin, Veratrumaldehyd, Zimtaldehyd, Zimatalkohol, Zimtsäure, Zimtsäureethylester, Zimtsäurebenzylester. Zu den leichter flüchtigen Riechstoffen zählen insbesondere die niedriger siedenden Riechstoffe natürlichen oder synthetischen Ursprung, die allein oder in Mischungen eingesetzt werden können. Beispiele für leichter flüchtige Riechstoffe sind Alkyisothiocyanate (Alkylsenföle), Butandion, Limönen, Linalool, Linaylacetat und - Propionat, Menthol, Menthon, Methyl-n-heptenon, Phellandren, Phenylacetaldehyd, Terpinylacetat, Zitral, Zitronellal.

## Korrosionsschutzmittel

Reinigungsmittel, für das maschinelle Geschirrspülen, können zum Schütze des Spülgutes oder der Maschine Korrosionsinhibitoren enthalten, wobei besonders Silberschutzmittel im Bereich des maschinellen Geschirrspülens eine besondere Bedeutung haben. Einsetzbar sind die bekannten Substanzen des Standes der Technik. Allgemein können vor allem Silberschutzmittel ausgewählt aus der Gruppe derTriazole, der Benzotriazole, der Bisbenzotriazole, der Aminotriazole, der Alkylaminotriazole und der Übergangsmetallsalze oder -komplexe eingesetzt werden. Besonders bevorzugt zu verwenden sind Benzotriazol und/oder Alkylaminotriazol. Man findet in Reinigerformulierungen darüber hinaus häufig aktivchlorhaltige Mittel, die das Korrodieren der Silberoberfläche deutlich vermindem können. In chlorfreien Reinigern werden besonders Sauerstoff- und stickstoffhaltige organische redoxaktive Verbindungen, wie zwei- und dreiwertige Phenole, z. B. Hydrochinon, Brenzkatechin, Hydroxyhydrochinon, Gallussäure, Phloroglucin, Pyrogallol bzw.

Derivate dieser Verbindungsklassen. Auch salz- und komplexartige anorganische Verbindungen, wie Salze der Metalle Mn, Ti, Zr, Hf, V, Co und Ce finden häufig Verwendung. Bevorzugt sind hierbei die Übergangsmetallsalze, die ausgewählt sind aus der Gruppe der Mangan und/oder Cobaltsalze und/oder -komplexe, besonders bevorzugt der Cobalt (ammin)-Komplexe, der Cobalt(acetat)-Komplexe, der Cobalt-(Carbonyl)-Komplexe, der Chloride des Cobalts oder Mangans und des Mangansulfats sowie den Mangankomplexen
$[Me\text{-}TACN)Mn^{IV}(m\text{-}0)_3Mn^{IV}(Me\text{-}TACN)]^{2+}(PF_6^-)_2$.
$[Me\text{-}MeTACN)Mn^{IV}(m\text{-}0)_3Mn^{IV}(Me\text{-}MeTACN)]^{2+}(PF_6^-)_2$,
$[Me\text{-}TACN)Mn^{III}(m\text{-}0)(m\text{-}0Ac)_2Mn^{III}(Me\text{-}TACN)]^{2+}(PF_6^-)_2$ und
$[Me\text{-}MeTACN)Mn^{III}(m\text{-}0)(m\text{-}0Ac)_2Mn^{III}(Me\text{-}MeTACN)]^{2+}(PF_6^-)_2$, wobei Me-TACN für 1,4,7-trimethyl-1,4,7-triazacyclononan und Me-MeTACN für 1,2,4,7-tetramethyl-1,4,7-triazacyclononan steht. Ebenfalls können Zinkverbindungen zur Verhinderung der Korrosion am Spülgut eingesetzt werden.

Im Rahmen der vorliegenden Erfindung werden maschinelle Geschirrspülmittel bevorzugt, die zusätzlich mindestens ein Silberschutzmittel ausgewählt aus der Gruppe der Triazole, der Benzotriazole, der Bisbenzotriazole, der Aminotriazole, der Alkylaminotriazole, vorzugsweise Benzotriazol und/oder Alkylaminotriazol, in Mengen von 0,001 bis 1 Gew.-%, vorzugsweise von 0,01 bis 0,5 Gew.-% und insbesondere von 0,05 bis 0,25 Gew.-%, jeweils bezogen auf das gesamte Mittel, enthalten.

**Glaskorrosionsschutzmittel**

Neben den zuvor genannten Silberschutzmitteln können die nach dem erfindungsgemäßen Verfahren hergestellten maschinelle Geschirrspülmittel weiterhin eine oder mehrere Substanzen zur Verringerung der Glaskorrosion enthalten. Im Rahmen der vorliegenden Anmeldung werden insbesondere Zusätze von Zink und/oder anorganischen und/oder organischen Zinksalzen und/oder Silikaten, beispielsweise das schichtförmige kristalline Natriumdisilikat SKS 6 der Clariant GmbH, und/oder wasserlösliche Gläser, beispielsweise Gläser, welche einen Masseverlust von wenigstens 0,5 mg unter den in DIN ISO 719 angegebenen Bedingungen aufweisen, zur Verringerung der Glaskorrosion bevorzugt. Besonders bevorzugte Mittel enthalten mindestens ein Zinksalz einer organischen Säure, vorzugsweise ausgewählt aus der Gruppe Zinkoleat, Zinkstearat, Zinkgluconat, Zinkacetat, Zinklactat und Zinkcitrat, in Mengen von 0,1 bis 5 Gew.-%, vorzugsweise von 0,2 bis 4 Gew.-% und insbesondere von 0,4 bis 3 Gew.-%, jeweils bezogen auf das Gesamtgewicht des Mittels nach der Beaufschlagung mit tensidhaltigen Aktivsubstanzgemischen.

Die nach dem erfindungsgemäßen Verfahren hergestellten Mittel können optional mit einer Verpackung versehen werden. Eine solche Verpackung enthält je nach Ausführungsform vorzugsweise einen oder mehrere Wasch- und Reinigungsmittelformkörper in einer einzelnen Verpackungseinheit. Es ist dabei erfindungsgemäß bevorzugt, entweder einen Formkörper derart zu gestalten, daß er eine Anwendungseinheit des Wasch- und Reinigungsmittels umfaßt, und diesen Formkörper einzeln zu verpacken, oder die Zahl an Formkörpern in eine Verpackungseinheit einzupacken, die in Summe eine Anwendungseinheit umfaßt. Bei einer Solldosierung von 80 g Wasch- und Reinigungsmittel ist es also erfindungsgemäß möglich, einen 80 g schweren Wasch- und Reinigungsmittelformkörper herzustellen und einzeln zu verpacken, es ist erfindungsgemäß aber auch möglich, zwei je 40 g schwere Wasch- und Reinigungsmittelformkörper in eine Verpackung einzupacken, um zu einer erfindungsgemäßen Kombination zu gelangen. Dieses Prinzip läßt sich selbstverständlich erweitem, so daß erfindungsgemäß Kombinationen auch drei, vier, fünf oder noch mehr Wasch- und Reinigungsmittelformkörper in einer Verpackungseinheit enthalten können. Selbstverständlich können zwei oder mehr Formkörper in einer Verpackung unterschiedliche Zusammensetzungen aufweisen. Auf diese Weise ist es möglich, bestimmte Komponenten räumlich voneinander zu trennen, um beispielsweise Stabilitätsprobleme zu vermeiden.

Das beschriebene Verpackungssystem kann aus den unterschiedlichsten Materialien bestehen und beliebige äußere Formen annehmen. Aus ökonomischen Gründen und aus Gründen der leichteren Verarbeitbarkeit sind allerdings Verpackungssysteme bevorzugt, bei denen das Verpackungsmaterial ein geringes Gewicht hat, leicht zu verarbeiten und kostengünstig ist. In erfindungsgemäß bevorzugten Kombinationen besteht das Verpackungssystem aus einem Sack oder Beutel aus einschichtigem oder laminiertem Papier und/oder Kunststofffolie.

Dabei können die Wasch- und Reinigungsmittelformkörper unsortiert, d.h. als lose Schüttung, in einen Beutel aus den genannten Materialien gefüllt werden. Es ist aber aus ästhetischen Gründen und zur Sortierung der Kombinationen in Sekundärverpackungen bevorzugt, die Wasch- und Reinigungsmittelformkörper einzeln oder zu mehreren sortiert in Säcke oder Beutel zu füllen. Für einzelne Anwendungseinheiten der Wasch- und Reinigungsmittelformkörper, die sich in einem Sack oder Beutel befinden, hat sich in der Technik der Begriff "flow pack" eingebürgert. Solche "flow packs" können dann - wiederum vorzugsweise sortiert - optional in Umverpackungen verpackt werden, was die kompakte Angebotsform des Formkörpers unterstreicht.

Die bevorzugt als Verpackungssystem einzusetzenden Säcke bzw. Beutel aus einschichtigem oder laminiertem Papier bzw. Kunststofffolie können auf die unterschiedlichste Art und Weise gestaltet werden, beispielsweise als aufgeblähte Beutel ohne Mittelnaht oder als Beutel mit Mittelnaht, welche durch Hitze (Heißverschmelzen), Klebstoffe oder Klebebänder verschlossen werden. Einschichtige Beutel- bzw. Sackmaterialien sind die bekannten Papiere, die gegebenenfalls imprägniert sein können, sowie Kunststoffolien, welche gegebenenfalls coextrudiert sein können. Kunststofffolien, die im Rahmen der vorliegenden Erfindung als Verpackungssystem eingesetzt werden können, sind beispielsweise in *Hans Dominighaus "Die Kunststoffe und ihre Eigenschaften", 3. Auflage, VDI Verlag, Düsseldorf, 1988, Seite 193,* angegeben.

## Patentansprüche

1. Verfahren zur Herstellung von mehrphasigen Wasch- und/oder Reinigungsmittelformkörpern, enthaltend Tensid(e), Gerüststoff(e), sowie optional weitere übliche Bestandteile von Wasch- und Reinigungsmitteln, **dadurch gekennzeichnet, daß**

   a) ein Wasch- und/oder Reinigungsmittelvorgemisch durch Tablettierung in einen Formkörper überführt und anschließend mit einem tensidhaltigen Aktivsubstanzgemisch beaufschlagt wird; und
   b) daß auf das tensidhaltige Aktivsubstanzgemisch eine weitere ein- oder mehrphasige Wasch- und/oder Reinigungsmitteltablette aufgebracht und haftend verklebt wird.

2. Verfahren nach Anspruch 1, **dadurch gekennzeichnet, daß** das tensidhaltige Aktivsubstanzgemisch einen Tensidgehalt oberhalb 20 Gew.-%, vorzugsweise oberhalb 35 Gew.-%, insbesondere oberhalb 55 Gew.-%, besonders bevorzugt oberhalb 75 Gew.-% und ganz besonders bevorzugt oberhalb 90 Gew.-% aufweist.

3. Verfahren nach einem der Ansprüche 1 oder 2, **dadurch gekennzeichnet, daß** das tensidhaltige Aktivsubstanzgemisch ausschließlich Tensid(e) enthält.

4. Verfahren nach einem der Ansprüche 1 bis 3, **dadurch gekennzeichnet, daß** das Gewicht des nachträglich beaufschlagten tensidhaltigen Aktivsubstanzgemisches maximal 7 Gew.-%, vorzugsweise maximal 5 Gew.-%, besonders bevorzugt maximal 2 Gew.-% und insbesondere maximal 1 Gew.-% des Gesamtgewichts des Formkörpers vor der Beaufschlagung entspricht.

5. Verfahren nach einem der Ansprüche 1 bis 4, **dadurch gekennzeichnet, daß** der Formkörper eine Mulde aufweist.

6. Verfahren nach Anspruch 5, **dadurch gekennzeichnet, daß** die Beaufschlagung des Formkörpers mit dem tensidhaltigen Aktivsubstanzgemisch in der Muldenfläche erfolgt.

7. Verfahren nach einem der Ansprüche 1 bis 6, **dadurch gekennzeichnet, daß** die Beaufschlagung des Formkörpers mit dem tensidhaltigen Aktivsubstanzgemisch durch Besprühen erfolgt.

8. Verfahren nach einem der Ansprüche 1 bis 7, **dadurch gekennzeichnet, daß** der Formkörper außer mit einem tensidhaltigen Aktivsubstanzgemisch auch mit einem Siegelmaterial beaufschlagt wird, wobei diese Beaufschlagung vorzugsweise in der Muldenfläche erfolgt.

9. Verfahren nach Anspruch 8, **dadurch gekennzeichnet, daß** als Siegelmaterial Polyethylenglycol(e) verwendet werden.

## Claims

1. A process for the production of multiphase detergent shaped bodies containing surfactant(s), builder(s) and optionally other typical ingredients of detergents, **characterized in that**

   a) a detergent premix is converted by a shaping process into a shaped body and then treated with a surfactant-containing active-substance mixture and
   b) another single-phase or multiphase detergent tablet is applied and adhesively bonded to the surfactant-containing active-substance mixture.

2. A process as claimed in claim 1, **characterized in that** the surfactant-containing active-substance mixture has a surfactant content above 20% by weight, preferably above 35% by weight, more preferably above 55% by weight, most preferably above 75% by weight and, in one most particularly preferred embodiment, above 90% by weight.

3. A process as claimed in claim 1 or 2, **characterized in that** the surfactant-containing active-substance mixture contains only surfactant(s).

4. A process as claimed in any of claims 1 to 3, **characterized in that** the weight of the surfactant-containing active-substance mixture subsequently applied corresponds to at most 7% by weight, preferably to at most 5% by weight, more preferably to at most 2% by weight and most preferably to at most 1% by weight of the total weight of the shaped body before application.

5. A process as claimed in any of claims 1 to 4, **characterized in that** the shaped body has a cavity.

6. A process as claimed in claim 5, **characterized in that** the shaped body is treated with the surfactant-containing active-substance mixture over the cavity area.

7. A process as claimed in any of claims 1 to 6, **characterized in that** the shaped body is treated with the surfactant-containing active-substance mixture by spraying.

8. A process as claimed in any of claims 1 to 7, **characterized in that** the shaped body is treated not only with a surfactant-containing active-substance mixture, but also with a sealing material, this treatment preferably being carried out over the cavity area.

9. A process as claimed in claim 8, **characterized in that** polyethylene glycol(s) is/are used as the sealing material.

## Revendications

1. Procédé de préparation de corps façonnés d'agent de lavage et/ou de nettoyage à plusieurs phases, contenant un ou des agents tensioactifs, un ou des builders ainsi qu'éventuellement d'autres constituants usuels d'agents de lavage et de nettoyage, **caractérisé**

   a) **en ce qu**'un prémélange d'agent de lavage et/ou de nettoyage est transformé par compression en un corps façonné et ensuite chargé avec un mélange de substances actives contenant un ou des agents tensioactifs et
   b) **en ce qu**'un autre comprimé d'agent de lavage et/ou de nettoyage à une ou plusieurs phases est appliqué et collé de manière adhérente sur le mélange de substances actives contenant un ou des agents tensioactifs.

2. Procédé selon la revendication 1, **caractérisé en ce que** le mélange de substances actives contenant un ou des agents tensioactifs présente une teneur en agent tensioactif supérieure à 20% en poids, de préference supérieure à 35% en poids, en particulier supérieure à 55% en poids, de manière particulièrement préférée supérieure à 75% en poids et de manière tout particulièrement préférée supérieure à 90% en poids.

3. Procédé selon l'une quelconque des revendications 1 ou 2, **caractérisé en ce que** le mélange de substances actives contenant un ou des agents tensioactifs contient exclusivement un ou des agents tensioactifs.

4. Procédé selon l'une quelconque des revendications 1 à 3, **caractérisé en ce que** le poids du mélange de substances actives contenant un ou des agents tensioactifs chargé ultérieurement correspond au maximum à 7% en poids, de préférence au maximum à 5% en poids, de manière particulièrement préférée au maximum à 2% en poids et en particulier au maximum à 1% en poids du poids total du corps façonné avant la charge.

5. Procédé selon l'une quelconque des revendications 1 à 4, **caractérisé en ce que** le corps façonné présente un creux.

6. Procédé selon la revendication 5, **caractérisé en ce que** la charge du corps façonné avec le mélange de substances actives contenant un ou des agents tensioactifs est réalisée dans la surface du creux.

7. Procédé selon l'une quelconque des revendications 1 à 6, **caractérisé en ce que** la charge du corps façonné avec le mélange de substances actives contenant un ou des agents tensioactifs est réalisée par aspersion.

8. Procédé selon l'une quelconque des revendications 1 à 7, **caractérisé en ce que** le corps façonné est chargé, outre par un mélange de substances actives contenant un ou des agents tensioactifs, également avec un matériau de scellage, cette charge étant de préférence réalisée dans la surface du creux.

**9.** Procédé selon la revendication 8, **caractérisé en ce qu'**on utilise un ou des polyéthylèneglycols comme matériau de scellage.